# FASCICULE DE BREVET EUROPEEN

(11) **EP 4 168 908 B1**
(45) Date de publication et mention de la délivrance du brevet: **09.12.2026**
(21) Numéro de dépôt: 21740150.4
(22) Date de dépôt: 22.06.2021
(51) Int. Cl.: G06F 21/34, G06F 21/31, G06F 21/35

(54) **DISPOSITIF ET PROCEDE D'AUTHENTIFICATION D'UN UTILISATEUR D'UN PREMIER DISPOSITIF ELECTRONIQUE CONNECTE A UN DEUXIEME DISPOSITIF ELECTRONIQUE**
GERÄT UND VERFAHREN ZUR AUTHENTIFIZIERUNG EINES BENUTZERS EINES ERSTEN, MIT EINEM ZWEITEN ELEKTRONISCHEN GERÄT VERBUNDENEN ELEKTRONISCHEN GERÄTS
DEVICE AND METHOF OF AUTHENTICATON OF A USER OF A FIRST ELECTRONIC DEVICE CONNECTED TO A SECOND ELECTRONIC DEVICE

(30) Priorité: 23.06.2020 FR 2006535
(43) Date de publication de la demande: 26.04.2023
(73) Titulaire: Orange, 92130 Issy-les-Moulineaux (FR)
(72) Inventeur: GUIGNON, Richard, 92326 Châtillon Cedex (FR); POIVRE, Sébastien, 92326 Châtillon Cedex (FR); BELAY, Gildas, 92326 Châtillon Cedex (FR)
(86) Numéro de dépôt international: PCT/FR2021/051127
(87) Numéro de publication internationale: WO 2021/260314

(56) Documents cités:
- US-A1- 2018 107 816
- US-B1- 6 766 456
- US-B1- 9 961 547
- CEENU GEORGE ET AL: "Seamless and Secure VR: Adapting and Evaluating Established Authentication Systems for Virtual Reality", 26 February 2017 (2017-02-26), XP055370563, Retrieved from the Internet <URL:https://www.internetsociety.org/sites/default/files/usec2017_01_4_George_paper.pdf> [retrieved on 20170509], DOI: 10.14722/usec.2017.23028
- NIEHORSTER DIEDERICK C. ET AL: "The Accuracy and Precision of Position and Orientation Tracking in the HTC Vive Virtual Reality System for Scientific Research", vol. 8, no. 3, 18 May 2017 (2017-05-18), XP055779937, ISSN: 2041-6695, Retrieved from the Internet <URL:http://journals.sagepub.com/doi/full-xml/10.1177/2041669517708205> [retrieved on 20210225], DOI: 10.1177/2041669517708205

## Description

### Domaine technique

L'invention concerne l'authentification d'un utilisateur d'un premier dispositif électronique portable, tel qu'un terminal de communication ou d'un casque de réalité virtuel ou augmenté.

### État de la technique

L'authentification permet de légitimer la demande d'accès à un dispositif (ordinateur, smartphone, objet connecté...) ou à un service (site internet, application, cloud, vidéo à la demande - ou VoD pour « video on demand » en anglais, téléconférence, espace collaboratif...) par une personne afin d'autoriser l'accès aux ressources (système, réseau de communication, applications, contenus...) du dispositif ou du service.

Pour cela, l'authentification consiste à vérifier l'identité de la personne requérant l'accès au dispositif ou au service par une vérification de données d'accès tel qu'un mot de passe, une donnée fournie par une pièce d'identification telle qu'une carte à puce, un certificat électronique..., une donnée biométrique (empreintes, iris, visage), une signature ou un geste.

Le type de données d'accès dépend généralement du degré de sécurité du dispositif ou service à accéder et du dispositif utilisé pour fournir ces données d'accès.

Dans les prochaines années, les systèmes de réalité virtuelle et de réalité augmentée sont promis à un développement certain. Or, l'utilisation de tels systèmes de réalité virtuelle et/ou augmentée dans certains usages, notamment professionnels, nécessite parfois d'authentifier l'utilisateur de ces systèmes. Par exemple, l'accès une réunion en réalité virtuelle par un participant nécessite d'authentifier ce participant avant de lui permettre d'accéder à la réunion et, notamment, aux documents échangés durant celle-ci. En outre, si ce participant souhaite partager certains de ses documents, il doit pouvoir accéder à ceux-ci de manière sécurisée à partir de la réunion virtuelle sans que les autres participants n'y aient aussi accès.

Or, aujourd'hui, l'authentification des utilisateurs à des dispositifs de communication et/ou des services fournis via des réseaux de communication est encore bien souvent basée sur l'usage du clavier et/ou de la souris pour saisir un identifiant d'utilisateur (aussi nommé login en anglais) et un mot de passe ou un code d'authentification.

En effet, l'usage des données biométriques a longtemps été limité en raison de capteurs non disponibles sur les dispositifs de communication et de coûts de calcul important lors de la reconnaissance de ces données biométriques. Aujourd'hui, notamment dans le domaine de la téléphonie mobile, l'authentification des utilisateurs par empreintes se développe, et l'authentification des utilisateurs par reconnaissance de visage démarre doucement. Mais cette dernière n'est pas toujours fiable montrant les difficultés à effectuer une authentification autre que le classique login/mot de passe.

Mais dans le cadre de la réalité virtuelle, c'est encore l'utilisation du login/mot de passe qui prévaut quel que soit le type de casque : casque connecté à un ordinateur (tels que l'Oculus Rift^{™} et le HTC Vive^{™}) ou casque autonome (tel que l'Oculus Quest^{™}...).

Dans le cas du casque connecté à un ordinateur, un clavier et/ou une souris sont bien souvent disponible pour permettre à l'utilisateur de saisir son login/mot de passe. Cependant, l'expérience utilisateur est dégradée car l'utilisateur doit basculer de l'ordinateur au casque au moment de l'authentification. Reprenons notre exemple de réunion virtuelle, l'utilisateur devra, pour saisir son login/mot de passe pour accéder à ses documents personnels afin d'en partager certains avec les autres participants, ôter son casque, c'est-à-dire « sortir » de la réunion même si le casque reste connecté à celle-ci. En effet, l'utilisateur non seulement ne verra plus, ni n'entendra plus ce qui se passe dans la réunion virtuelle, mais ne pourra plus non plus participer tant qu'il n'aura pas remis son casque. Idéalement, l'expérience de réalité virtuelle doit se faire en immersion dans le casque à tout instant.

Dans le cas du casque autonome, l'utilisateur ne dispose pas de clavier physique permettant de saisir facilement les informations d'authentification. Certes, il est possible d'afficher un clavier virtuel pour permettre à l'utilisateur de saisir ses informations d'authentification mais l'interaction n'est pas aussi et naturelle qu'avec un clavier réel engendrant des erreurs d'authentification.

La demande de brevet américaine US2018107816 propose de vérifier l'identité d'un utilisateur en réalité virtuelle en fonction de caractéristiques d'interaction de l'utilisateur obtenues par des captures physiques prédéfinies en réponse à une requête d'exécution d'une tâche cible requérant la vérification de l'identité de l'utilisateur. Ainsi, l'utilisateur est reconnu par son comportement, ses attitudes lors de l'interaction au moyen d'un terminal de réalité virtuelle. Or, la capture de l'attitude de l'utilisateur permet une vérification de l'identité de l'utilisateur uniquement en cours d'utilisation du terminal de réalité virtuelle mais pas lors de la connexion au terminal de réalité virtuelle. En outre, le comportement, l'attitude de l'utilisateur sont susceptibles d'être influencés par l'état de l'utilisateur, c'est-à-dire son humeur, sa fatigue, sa santé... entrainant ainsi des erreurs d'authentification.

### Exposé de l'invention

Un des buts de la présente invention est de remédier à des inconvénients/insuffisances de l'état de la technique/ d'apporter des améliorations par rapport à l'état de la technique.

Un objet de l'invention est un dispositif d'authentification d'un utilisateur d'un premier dispositif électronique connecté à un deuxième dispositif électronique, le premier dispositif électronique et le deuxième dispositif électronique étant portables séparément par l'utilisateur, le dispositif d'authentification comportant
- un analyseur apte à vérifier si une valeur détectée d'un paramètre caractéristique relatif du deuxième dispositif électronique correspond à une valeur mémorisée de ce paramètre caractéristique relatif du deuxième d ispositif électronique associée à un identifiant d'un utilisateur requérant une authentification, le paramètre caractéristique relatif correspondant au paramètre caractéristique du deuxième dispositif électronique mesuré relativement au paramètre caractéristique du premier dispositif électronique.

Ainsi, de nouvelles données biométriques peuvent être utilisées pour identifier l'utilisateur, puisque la position relative du premier dispositif électronique par rapport au deuxième dispositif électronique tous deux portés par l'utilisateur dépend de données biométriques de l'utilisateur. Par exemple, si le deuxième dispositif électronique est une montre ou une manette et que le premier dispositif électronique est un casque de réalité virtuelle, le paramètre caractéristique relatif peut être la distance entre ce deuxième dispositif électronique et le casque qui dépend notamment de la longueur du bras qui est propre à chaque individu, et de la position du bras lors de l'authentification.

Un autre avantage de l'invention est qu'il ne nécessite pas de doter le premier dispositif électronique et le deuxième dispositif électronique de capteur spécifiques mais permet d'utiliser les capteurs déjà implémenté dans ceux-ci, tels que capteur de position, accéléromètres... pour détecter la valeur du paramètre caractéristique relatif.

En outre, l'authentification est ainsi adaptée aux capacités du premier dispositif électronique, notamment lorsqu'il s'agit d'un dispositif immersif tel qu'un casque de réalité virtuel, pour lequel la saisie d'un mot de passe est complexe car la détection de la saisie sur un clavier virtuel en trois dimensions dans un environnement immersif est peu précise et donc source d'erreur.

Avantageusement, l'analyseur est apte à vérifier si une série de valeurs détectées d'un paramètre caractéristique relatif du deuxième dispositif électronique correspond à une série de valeurs mémorisée de ce paramètre caractéristique relatif du deuxième dispositif électronique associée à un identifiant d'un utilisateur requérant une authentification.

Ainsi, l'authentification est améliorée par l'utilisation d'une série de valeur d'un paramètre caractéristique. Par exemple, la série de valeur est obtenue par une série de gestes effectués par l'utilisateur. Si le paramètre caractéristique est la position relative du premier dispositif électronique par rapport au deuxième dispositif électronique (par exemple d'un casque de réalité virtuelle par rapport à une manette de réalité virtuelle ou un vêtement de réalité virtuelle : gant, chausson...), les valeurs détectées dépendent à la fois de l'ordre dans lesquels les gestes sont effectuées, du type de gestes effectuées et de la morphologie de l'utilisateur dans chacun de ces gestions : distances main-tête dans différentes positions du bras : bras tendu le long du corps, puis bras plié à 45° vers l'avant, bras plié poing à l'épaule, bras tendu en l'air...

Avantageusement, l'analyseur est apte à vérifier les valeurs de plusieurs paramètres caractéristiques relatifs d'au moins un deuxième dispositif électronique.

Ainsi, non seulement, la morphologie de l'utilisateur peut être utilisée mais aussi son comportement : par exemple la vitesse relative de la main par rapport à la tête et/ou l'accélération relative de la main par rapport à la tête entre deux positions de la main. Cela améliore encore l'authentification.

Avantageusement, le dispositif d'authentification comporte au moins un parmi les dispositifs de fourniture de paramètre caractéristique relatif du deuxième dispositif électronique
- un détecteur de paramètre caractéristique relatif du deuxième dispositif électronique,
- un récepteur d'une valeur détectée du paramètre caractéristique relatif du deuxième dispositif électronique, le récepteur recevant une valeur provenant d'un détecteur de paramètre caractéristique relatif du deuxième dispositif électronique implémenté dans le deuxième dispositif électronique,
- un récepteur d'une valeur détectée du paramètre caractéristique relatif du deuxième dispositif électronique, le récepteur recevant une valeur provenant d'un détecteur de paramètre caractéristique relatif du deuxième dispositif électronique implémenté dans le premier dispositif électronique.

Avantageusement, le détecteur comporte
- un contrôleur apte à commander au moins un capteur distant de valeurs du paramètre caractéristique d'un dispositif distant, le capteur étant implémenté dans le dispositif distant.

Avantageusement, le détecteur comporte
- un capteur apte à mesurer une valeur du paramètre caractéristique relatif du deuxième dispositif électronique.

Avantageusement, le paramètre caractéristique relatif est constitué par au moins un des paramètres caractéristiques suivants :
- position relative du deuxième dispositif électronique par rapport au premier dispositif électronique ;
- orientation relative du deuxième dispositif électronique par rapport au premier dispositif électronique ;
- vitesse relative du deuxième dispositif électronique par rapport au premier dispositif électronique ;
- accélération relative du deuxième dispositif électronique par rapport au premier dispositif électronique.

Avantageusement, le premier dispositif électronique est constitué par un parmi des dispositifs principaux suivants :
- un terminal de communication portable;
- une tablette ;
- une console portable ;
- un casque de réalité virtuelle;
- un casque de réalité augmenté.

Avantageusement, le deuxième dispositif électronique est constitué par un parmi des dispositifs secondaires suivants :
- un périphérique portable ;
- un objet connecté portable ;
- une manette de réalité virtuelle ;
- une manette de réalité augmenté.

Un objet de l'invention est également un premier dispositif électronique d'un utilisateur, le premier dispositif électronique de l'utilisateur étant connecté à un deuxième dispositif électronique, le premier dispositif électronique et le deuxième dispositif électronique étant portables séparément par l'utilisateur, le premier dispositif électronique comportant
- un dispositif d'authentification de l'utilisateur du premier dispositif électronique apte à vérifier si une valeur détectée d'un paramètre caractéristique relatif du deuxième dispositif électronique correspond à une valeur mémorisée de ce paramètre caractéristique relatif du deuxième dispositif électronique associée à un identifiant d'un utilisateur requérant une authentification, le paramètre caractéristique relatif correspondant au paramètre caractéristique du deuxième dispositif électronique mesuré relativement au paramètre caractéristique du premier dispositif électronique.

Un autre objet de l'invention est un procédé d'authentification d'un utilisateur d'un premier dispositif électronique connecté à un deuxième dispositif électronique, le premier dispositif électronique et le deuxième dispositif électronique étant portables séparément par l'utilisateur, le procédé d'authentification comportant
- vérifier si une valeur détectée d'un paramètre caractéristique relatif du deuxième dispositif électronique correspond à une valeur mémorisée de ce paramètre caractéristique relatif du deuxième dispositif électronique associée à un identifiant d'un utilisateur requérant une authentification, le paramètre caractéristique relatif correspondant au paramètre caractéristique du deuxième dispositif électronique mesuré relativement au paramètre caractéristique du premier dispositif électronique.

Un objet de l'invention est aussi un procédé d'enregistrement d'un utilisateur d'un premier dispositif électronique connecté à un deuxième dispositif électronique, le premier dispositif électronique et le deuxième dispositif électronique étant portables séparément par l'utilisateur, le procédé d'enregistrement comportant
- mémoriser en association avec un identifiant de l'utilisateur au moins une valeur d'un paramètre caractéristique relatif du deuxième dispositif électronique, le paramètre caractéristique relatif correspondant au paramètre caractéristique du deuxième dispositif électronique mesuré relativement au paramètre caractéristique du premier dispositif électronique.

Avantageusement, le procédé d'enregistrement comporte
- mesurer au moins une valeur du paramètre caractéristique relatif du deuxième dispositif électronique, la valeur mesurée étant mémorisée directement ou indirectement. Avantageusement, le procédé d'enregistrement comporte
- calculer une valeur statistique du paramètre caractéristique relatif du deuxième dispositif électronique, la valeur statistique étant mémorisée.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie de l'invention et étant conçus pour commander l'exécution des différentes étapes de ce procédé.

L'invention vise donc aussi un programme comprenant des instructions de code de programme pour l'exécution des étapes du procédé d'authentification et/ou du procédé d'enregistrement lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

### Brève description des dessins

Les caractéristiques et avantages de l'invention apparaîtront plus clairement à la lecture de la description, faite à titre d'exemple, et des figures s'y rapportant qui représentent :
[Fig 1] Figure 1, un schéma simplifié d'un dispositif d'authentification selon l'invention,
[Fig 2a] Figure 2a, un schéma simplifié d'un premier mode d'implémentation du dispositif d'authentification selon l'invention,
[Fig 2b] Figure 2b, un schéma simplifié d'un deuxième mode d'implémentation du dispositif d'authentification selon l'invention,
[Fig 2c] Figure 2c, un schéma simplifié d'un troisième mode d'implémentation du dispositif d'authentification selon l'invention,
[Fig 3a] Figure 3a, un schéma simplifié d'un premier exemple de paramètre caractéristique utilisé par le dispositif d'authentification selon l'invention,
[Fig 3b] Figure 3b, un schéma simplifié d'un deuxième exemple de paramètre caractéristique utilisé par le dispositif d'authentification selon l'invention,
[Fig 3c] Figure 3c, un schéma simplifié d'un troisième exemple de paramètre caractéristique utilisé par le dispositif d'authentification selon l'invention,
[Fig 3d] Figure 3d, un schéma simplifié d'un quatrième exemple de paramètre caractéristique utilisé par le dispositif d'authentification selon l'invention,
[Fig 4] Figure 4, un schéma simplifié d'un procédé d'enregistrement d'un utilisateur selon l'invention,
[Fig 5] Figure 5, un schéma simplifié d'un procédé d'authentification selon l'invention.

### Description des modes de réalisation

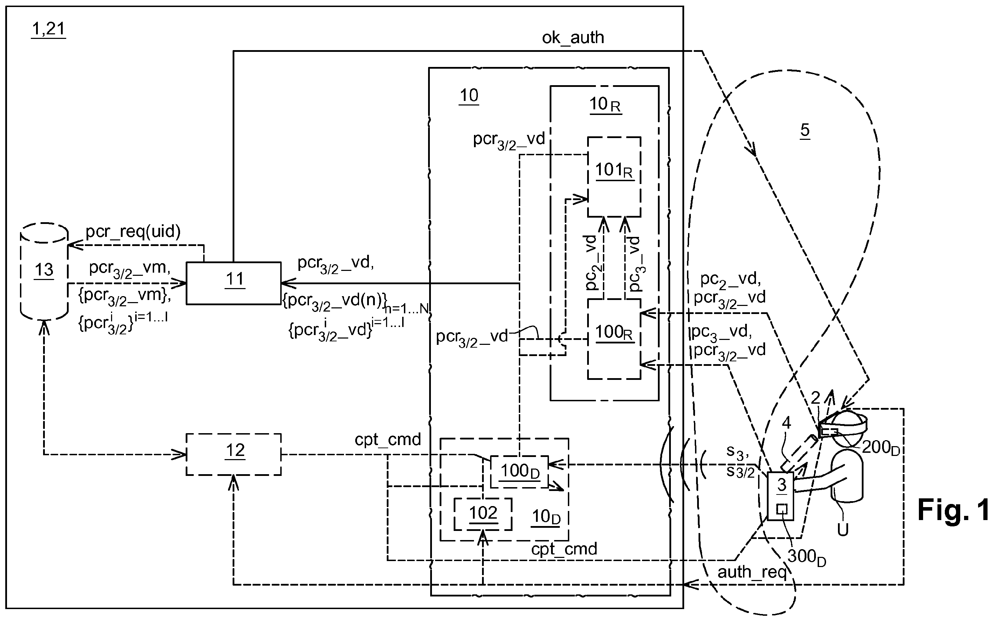

La figure 1 illustre un schéma simplifié d'un dispositif d'authentification selon l'invention.

Le dispositif d'authentification 1, 21 est un dispositif apte à authentifier un utilisateur U d'un premier dispositif électronique 2 connecté à un deuxième dispositif électronique 3. Le premier dispositif électronique 2 et le deuxième dispositif électronique 3 sont portables séparément par l'utilisateur U. Le dispositif d'authentification 1, 21 comporte
- un analyseur 11 apte à vérifier si une valeur détectée d'un paramètre caractéristique relatif prc_{3/2}_vd du deuxième dispositif électronique correspond à une valeur mémorisée de ce paramètre caractéristique relatif prc_{3/2}_vm du deuxième dispositif électronique associée à un identifiant *uid* d'un utilisateur U requérant une authentification *auth_req,* le paramètre caractéristique relatif prc_{3/2} correspondant au paramètre caractéristique du deuxième dispositif électronique pc₃ mesuré relativement au paramètre caractéristique du premier dispositif électronique pc₂.

En particulier, l'analyseur 11 est apte à vérifier si une série de valeurs détectées d'un paramètre caractéristique relatif {pcr_{3/2}_vd(n)}_{n=1...N} du deuxième dispositif électronique correspond à une série de valeurs mémorisée {pcr_{3/2_}vm(n)}_{n=1...N} de ce paramètre caractéristique relatif du deuxième dispositif électronique associée à un identifiant uid d'un utilisateur requérant une authentification.

En particulier, l'analyseur 11 est apte à vérifier les valeurs de plusieurs paramètres caractéristiques relatifs ${\left\{{pcr}_{3 / 2}^{i}_vd\right\}}^{i = 1 … I} , {\left\{{pcr}_{3 / 2}^{i}_vd\left(n\right)\right\}}_{n = 1 … N}^{i = 1 … I}$ d'au moins un deuxième dispositif électronique 3.

En particulier, la valeur mémorisée a été mémorisée préalablement la mise en œuvre de l'authentification par le dispositif d'authentification 1 et/ou préalablement à une demande d'accès déclenchant une authentification par le dispositif d'authentification selon l'invention.

En particulier, la valeur mémorisée a été mémorisée par un enregistreur d'utilisateur lors d'un premier accès à un produit ou service demandant une authentification.

En particulier, le dispositif d'authentification 1, 21 comporte au moins un parmi les dispositifs de fourniture 10 de paramètre caractéristique relatif du deuxième dispositif électronique 2
- un capteur 100D de paramètre caractéristique relatif du deuxième dispositif électronique,
- un récepteur 100_{R} d'une valeur détectée du paramètre caractéristique relatif pcr_{3/2_}vd du deuxième dispositif électronique, le récepteur 100_{R} recevant une valeur pcr_{3/2}_vd provenant d'un capteur 300D de paramètre caractéristique relatif du deuxième dispositif électronique implémenté dans le deuxième dispositif électronique 3,
- un récepteur 100_{R} d'une valeur détectée du paramètre caractéristique relatif pcr_{3/2_}vd du deuxième dispositif électronique, le récepteur 100_{R} recevant une valeur provenant d'un capteur 200D de paramètre caractéristique relatif du deuxième dispositif électronique implémenté dans le premier dispositif électronique 2,
- un calculateur 10_{R} d'une valeur détectée du paramètre caractéristique relatif pcr_{3/2}_vd du deuxième dispositif électronique comportant :
   + un récepteur 100_{R} d'une valeur détectée du paramètre caractéristique du deuxième dispositif électronique pc₃_vd provenant du deuxième dispositif électronique 3 et d'une valeur détectée du paramètre caractéristique du premier dispositif électronique pc₂_vd provenant du premier dispositif électronique 2, et
   + un calculateur élémentaire 101_{R} apte à déterminer une valeur du paramètre caractéristique relatif pcr_{3/2}_vd du deuxième dispositif électronique en fonction de la valeur détectée reçue du paramètre caractéristique du deuxième dispositif électronique pc₃_vd et de la valeur détectée reçue du paramètre caractéristique du premier dispositif électronique pc₂_vd.

En particulier, le détecteur 10_{D} comporte
- un contrôleur 102 apte à commander *cpt_cmd* au moins un capteur 200_{D}, 300_{D} distant de valeurs du paramètre caractéristique pcr_{3/2}_vd d'un dispositif distant 2, 3, le capteur 200_{D}, 300_{D} étant implémenté dans le dispositif distant 2, 3.

En particulier, le détecteur 10_{D} comporte
- un capteur 100_{D} apte à mesurer une valeur du paramètre caractéristique relatif du deuxième dispositif électronique pcr_{3/2}_vd.

La figure 1 montre un exemple d'architecture de communication implémentant l'invention.

Dans cet exemple, le dispositif d'authentification de l'invention 21, 1 est implémenté soit dans un premier dispositif électronique 2 porté par un utilisateur U, soit en dehors de ce dispositif, par exemple dans un dispositif d'authentification distinct 1. Le dispositif d'authentification distinct 1 est notamment soit co-localisé avec le premier dispositif électronique 2, soit distant de ce premier dispositif électronique. Dans le cas d'un dispositif d'authentification distinct 1 distant, le dispositif d'authentification 1 est connecté au premier dispositif électronique notamment via un réseau de communication 5.

Le deuxième dispositif électronique 3 porté aussi par l'utilisateur U est connecté au premier dispositif électronique 2 soit par voie filaire (en utilisant notamment une connectique de périphérique tel qu'une connectique USB ou Ethernet), soit par réseau local (Bluetooth, Wifi, etc.). Eventuellement, dans le cas d'un dispositif d'authentification distinct 1 distant, le deuxième dispositif électronique 3 est connecté au dispositif d'authentification 1 via un réseau de communication 5.

L'utilisateur U utilise le premier dispositif électronique 2 pour accéder à un produit ou des services, notamment pour accéder au premier dispositif électronique, à un troisième dispositif électronique (non illustré par la figure 1), par exemple, un disque dur sécurisé, un dispositif de gestion domotique, un décodeur TV aussi nommé SetTop Box en anglais, etc., local ou non, ou à un service tel qu'une service de fourniture de contenus, service de vidéo à la demande, service de gestion de documents dans un serveur distant (ou « nuage », aussi nommé Cloud en anglais), un site Internet, une application, etc.

Par exemple, le produit ou le dispositif mettant en œuvre le service auquel le premier dispositif électronique 2 demande l'accès, notamment le premier dispositif électronique 2 tel qu'illustré par la figure 1, requiert *auth_req,* suite à une demande d'accès par le premier dispositif électronique 2, l'authentification de l'utilisateur U au dispositif d'authentification 1, 21 préalablement à la mise en oeuvre de la fourniture d'accès.

En particulier, le dispositif d'authentification 1, 21 comporte un contrôleur 12, 102 apte à commander *cpt_cmd* une mesure d'au moins paramètre caractéristique relatif pcr_{3/2}. Cette commande déclenche *cpt_cmd* l'activation d'un ou plusieurs détecteurs, notamment
- d'un capteur 100D du dispositif d'authentification 1 lorsque celui-ci est implémenté dans le premier dispositif électronique 2 (le capteur 100D constituant alors le capteur 200D du premier dispositif électronique) ou co-localisé avec le premier dispositif électronique 2, et/ou
- d'un capteur 200D du premier dispositif électronique 2, et/ou
- d'un capteur 300D du deuxième dispositif électronique 3.

En particulier, le ou les détecteurs 100_{D}, 200_{D}, 300_{D} comportent un ou plusieurs capteurs (non illustrés) en fonction du nombre et ou du type de paramètres caractéristiques à détecter. Par exemple, le capteur du capteur 100D reçoit des signaux s₃, s_{3/2} provenant du deuxième dispositif électronique 3, comme le montre la figure 1, et/ou du premier dispositif électronique 2 (non illustré). Ces signaux s₃, s_{3/2} sont notamment des signaux visuels captés par une caméra du capteur 100D ou des signaux radio captés par un récepteur notamment Bluetooth du capteur 100D permettant au capteur 100D de déterminer par exemple la position pc₃=pos₃ et/ou la distance pc₃=d₃ du deuxième dispositif électronique 3 voire la position pc_{3/2}=pos_{3/2} et/ou la distance pc_{3/2}=d_{3/2} du deuxième dispositif électronique 3 par rapport au premier dispositif électronique 2.

Le capteur 100D, 200D, 300D fournit au dispositif d'authentification 1, 21 la valeur détectée d'un paramètre caractéristique pc2_vd, pc3_vd, voire d'un paramètre caractéristique relatif pcr_{3/2_}vd.

Lorsque l'un des détecteurs 200D, 300D n'est pas implémenté dans le dispositif d'authentification 1, 21, le dispositif d'authentification 1, 21 comporte au moins un récepteur 100R recevant au moins la ou les valeurs détectés d'un ou plusieurs paramètres caractéristiques pc2_vd, pc3_vd, voire d'un ou plusieurs paramètres caractéristiques relatifs pcr_{3/2}_vd provenant du premier dispositif électronique 2 et/ou du deuxième dispositif électronique les implémentant.

Lorsque le paramètre caractéristique pc₂, pc₃ dont la valeur est détectée pc₂_vd, pc₃_vd n'est pas un paramètre caractéristique relatif du deuxième dispositif électronique pcr_{3/2}, le dispositif d'authentification 1, 21 comporte au moins un calculateur élémentaire 101_{R} apte à déterminer en fonction des valeurs détectées reçues pc₂_vd, pc₃_vd la valeur détectée du paramètre caractéristique relatif du deuxième dispositif électronique pcr_{3/2_}vd.

En particulier, le dispositif d'authentification 1, 21 comporte un chargeur 10 de valeur de paramètre caractériel relatif, aussi nommé dispositif de fourniture de paramètre caractéristique relatif du deuxième dispositif. Ce chargeur 10 comporte le détecteur 10_{D} et/ou un ou plusieurs récepteurs 100_{R} et/ou un calculateur élémentaire 101_{R}. Eventuellement, le chargeur 10 comporte un calculateur 10R implémentant un ou plusieurs récepteurs 100_{R} et/ou le calculateur élémentaire 101_{R}.

Par exemple, dans le cas où l'invention n'utilise qu'un paramètre caractéristique relatif, le chargeur 10 comporte
- soit uniquement un détecteur 10_{D} apte à détecter la valeur d'un paramètre caractéristique relatif pcr_{3/2}_vd,
- soit un détecteur 10_{D} apte à détecter la valeur d'un paramètre caractéristique du premier dispositif électronique pc₂_vd et la valeur d'un paramètre caractéristique du deuxième dispositif électronique pc_{3_}vd et un calculateur élémentaire 101_{R},
- soit un ou des récepteurs 100_{R} apte à recevoir la valeur d'un paramètre caractéristique du premier dispositif électronique pc₂_vd provenant du premier dispositif électronique 2 et la valeur d'un paramètre caractéristique du deuxième dispositif électronique pc₃_vd provenant du deuxième dispositif électronique 3 et un calculateur élémentaire 101_{R} (les récepteurs 100_{R} et le calculateur élémentaire 101_{R} étant éventuellement implémentés dans un calculateur 10_{R}),
- soit uniquement un récepteur 100_{R} apte à recevoir la valeur d'un paramètre caractéristique relatif pcr_{3/2}_vd provenant du premier dispositif électronique 2 ou du deuxième dispositif électronique 3.

Dans le cas où l'invention utilise plusieurs paramètres caractéristiques relatifs, le chargeur 10 comporte éventuellement :
- soit uniquement un détecteur 10_{D} apte à détecter les valeurs de tous les paramètres caractéristiques relatifs ${\left\{{pcr}_{3 / 2}^{i}_vd\right\}}^{i = 1 … I}$,
- soit plusieurs détecteurs 10_{D}, chaque détecteur étant apte à détecter une valeur d'un ou plusieurs des paramètres caractéristiques relatifs ${\left\{{pcr}_{3 / 2}^{i}_vd\right\}}^{i}$ parmi l'ensemble des paramètres caractéristiques relatifs de telle sorte que l'ensemble des détecteurs 10_{D} est apte à détecter les valeurs de tous les paramètres caractéristiques relatifs ${\left\{{pcr}_{3 / 2}^{i}_vd\right\}}^{i = 1 … I}$*,*
- soit un ou plusieurs détecteurs 10_{D} et un ou plusieurs récepteurs 10_{R}, chaque détecteur étant apte à détecter une valeur d'un ou plusieurs des paramètres caractéristiques relatifs ${\left\{{pcr}_{3 / 2}^{i}_vd\right\}}^{i}$ parmi l'ensemble des paramètres caractéristiques relatifs et chaque récepteur étant apte à recevoir une valeur d'un ou plusieurs des paramètres caractéristiques relatifs ${\left\{{pcr}_{3 / 2}^{i}_vd\right\}}^{i}$ parmi l'ensemble des paramètres caractéristiques relatifs de telle sorte que l'ensemble des détecteurs 10_{D} et récepteurs 10_{R} est apte à fournir les valeurs de tous les paramètres caractéristiques relatifs ${\left\{{pcr}_{3 / 2}^{i}_vd\right\}}^{i = 1 … I}$*,*
- soit un ou plusieurs détecteurs 10_{D} de paramètres caractéristiques ou de paramètres caractéristiques relatifs et/ou un ou plusieurs récepteurs 10_{R} de paramètres caractéristiques ou de paramètres caractéristiques relatifs, et le cas échéant un ou plusieurs calculateurs élémentaires 101_{R}, chaque détecteur étant apte à détecter une valeur d'un ou plusieurs des paramètres caractéristiques ${\left\{{pc}_{3}^{i}_vd\right\}}^{i} , {\left\{{pc}_{2}^{i}_vd\right\}}^{i}$ et/ou d'un ou plusieurs des paramètres caractéristiques relatifs ${\left\{{pcr}_{3 / 2}^{i}_vd\right\}}^{i}$ parmi l'ensemble des paramètres caractéristiques relatifs, chaque récepteur étant apte à recevoir une valeur d'un ou plusieurs des paramètres caractéristiques ${\left\{{pc}_{3}^{i}_vd\right\}}^{i} , {\left\{{pc}_{2}^{i}_vd\right\}}^{i}$ et/ou d'un ou plusieurs des paramètres caractéristiques relatifs ${\left\{{pcr}_{3 / 2}^{i}_vd\right\}}^{i}$ parmi l'ensemble des paramètres caractéristiques relatifs, et chaque calculateur élémentaire 101_{R} étant apte à déterminer une valeur d'un ou plusieurs des paramètres caractéristiques relatifs ${\left\{{pcr}_{3 / 2}^{i}_vd\right\}}^{i}$ parmi l'ensemble des paramètres caractéristiques relatifs de telle sorte que l'ensemble des détecteurs 10_{D}, des récepteurs 10_{R} et des calculateurs élémentaires 101_{R} est apte à fournir les valeurs de tous les paramètres caractéristiques relatifs ${\left\{{pcr}_{3 / 2}^{i}_vd\right\}}^{i = 1 … I}$*,* etc.

L'analyseur 11 reçoit alors au moins une valeur d'au moins un paramètre caractéristique relatif ${\left\{{pcr}_{3 / 2}^{i}_vd\left(n\right)\right\}}_{n = 1 … N}^{i = 1 … I}$ fournit notamment par le chargeur 10 et/ou le ou les détecteurs 10_{D} et/ou le calculateur 10_{R} et/ou le ou les récepteurs 100_{R}. L'analyseur 11 comporte notamment un deuxième moteur de recherche (non illustrer) apte à rechercher une ou plusieurs valeurs d'un ou plusieurs paramètres caractéristiques relatifs mémorisées ${\left\{{pcr}_{3 / 2}^{i}_vm\left(n\right)\right\}}_{n = 1 … N}^{i = 1 … I}$ en association avec un identifiant de l'utilisateur *uid.*

En particulier, la requête d'authentification auth_req reçue par le dispositif d'authentification comporte un identifiant de l'utilisateur *uid.*

De manière alternative, le dispositif d'authentification 1 comporte un générateur de message d'identification (non illustré). Le message d'identification est reproduit à destination de l'utilisateur par une interface de reproduction du dispositif d'authentification et/ou du premier dispositif électronique 2 et/ou d'un troisième dispositif électronique distinct du premier dispositif électronique (par exemple des haut-parleurs placés dans la pièce où se trouve l'utilisateur U, un écran de télévision ou d'ordinateur lorsque l'utilisateur porte un casque 2 de réalité augmentée ou un smartphone 2). L'utilisateur s'identifie notamment par fourniture vocale d'un identifiant. Le dispositif d'authentification 1 comporte alors notamment un dispositif de reconnaissance vocale ou convertisseur de parole en texte fournissant l'identifiant de l'utilisateur *uid.*

Dans une autre alternative, le dispositif d'authentification comporte un premier moteur de recherche (non illustré) d'un identifiant utilisateur préalablement mémorisé avec un identifiant de terminal. Lorsque le deuxième dispositif électronique transmet avec la requête d'authentification un identifiant de terminal, le premier moteur de recherche extrait l'identifiant de terminal de la requête d'authentification *auth_req* et l'utilise pour recherche l'identifiant utilisateur *uid* mémorisé en association (par exemple dans une base de données d'utilisateur 13).

En particulier, l'identifiant utilisateur a été mémorisé par un enregistreur d'utilisateur lors d'un premier accès à un produit ou service demandant une authentification avec la valeur mémorisée du paramètre caractéristique relatif.

En fonction du résultat de la vérification exécuté par l'analyseur 11, l'analyseur 11 fournit ou non un message d'authentification *ok_auth.* En particulier, le message d'authentification *ok_auth* est apte à déclencher l'accès au produit ou service demandé par l'utilisateur U.

En particulier, l'analyseur 11 fournit, lorsque les valeurs détectées et mémorisées ne correspondent pas, un message d'échec d'authentification *n_auth* (non illustré). Le message d'échec déclenche, notamment, la reproduction d'un message à destination de l'utilisateur U : soit un message d'échec d'accès, soit un message d'échec d'authentification apte à permettre éventuellement une nouvelle tentative d'authentification.

En particulier, le dispositif d'authentification 1 selon l'invention est implémenté dans un dispositif de fourniture d'accès à un produit ou service (non illustré).

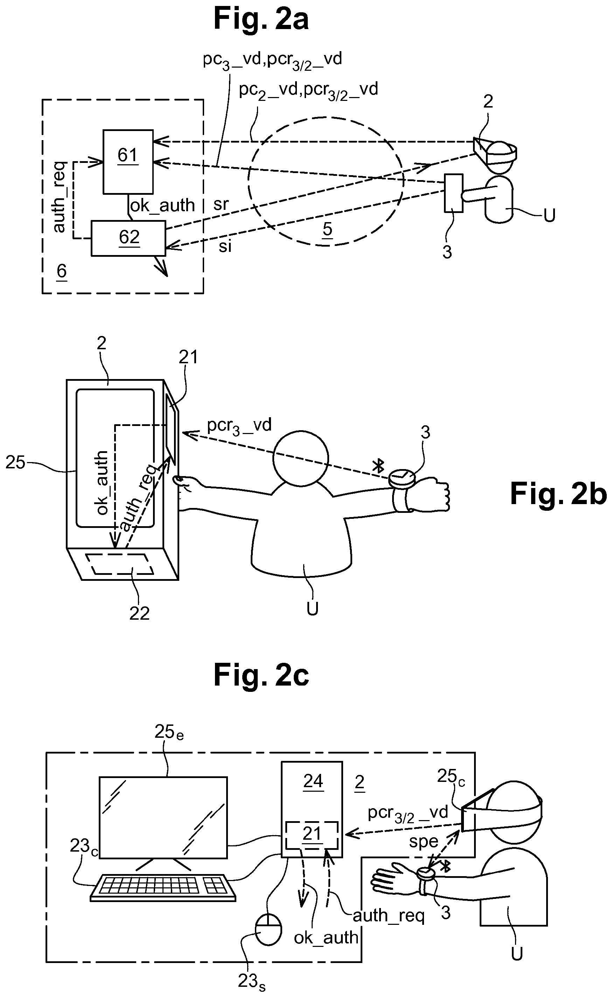

Les figures 2a à 2c montrent différentes implémentations du dispositif d'authentification selon l'invention, notamment tel qu'illustré par la figure 1.

En particulier, le premier dispositif électronique 2 est constitué par un parmi des dispositifs principaux portables suivants :
- un terminal de communication portable;
- une tablette ;
- une console portable ;
- un casque de réalité virtuelle;
- un casque de réalité augmenté.

En particulier, le deuxième dispositif électronique 3 est constitué par un parmi des dispositifs secondaires portables suivants :
- un périphérique portable ;
- un objet connecté portable ;
- une manette de réalité virtuelle ;
- une manette de réalité augmenté.

En particulier, le dispositif d'authentification 1 selon l'invention est adapté aux capacités de premier dispositif électronique d'un système immersif (c'est-à-dire, notamment de système de réalité virtuelle ou augmenté, de système interactif holographique ou en trois-dimension, etc.). Parmi les capacités qui peuvent être exploitées par le dispositif d'authentification 1, les paramètres caractéristiques sont au moins un des paramètres caractéristiques suivants :
- la position et l'orientation dans l'espace de l'utilisateur via le casque, et de ses mains via les manettes et/ou gants de réalité virtuelle et/ou pieds via des chaussons virtuels,
- les accélérations et les vitesses de déplacement du casque, et des manettes et/ou gants et/ou chaussons,
- la position des doigts sur les manettes et/ou dans les gants et/ou les chaussons,
- la pression exercée par les doigts sur les différents boutons des manettes et/ou dans les gants et/ou les chaussons,
- etc.

Compte tenu de la spécificité des capacités pour créer l'information d'authentification constituée par un ou plusieurs valeurs d'un ou plusieurs paramètres caractéristiques relatifs, la création du modèle d'authentification, c'est-à-dire de la série d'une ou plusieurs valeurs d'un ou plusieurs paramètres caractéristiques relatifs mémorisées, est effectué avec les mêmes premier dispositif électronique et deuxième dispositif électronique utilisés pour s'authentifier (par exemple, par le premier dispositif électronique et deuxième dispositif électronique du système immersif).

Au moment de la création de son compte, l'utilisateur pourra sélectionner son challenge d'authentification parmi plusieurs possibilités dont :
- la signature comportementale : l'utilisateur doit pouvoir reproduire une signature suivant un modèle qu'il aura lui-même défini en deux ou trois-dimension (avec sa main, son pied... suivant l'emplacement du deuxième dispositif électronique. Le ou les paramètres caractéristiques relatifs sont alors la position et/ou la distance et/ou la vitesse de déplacement et/ou l'accélération. Plus le nombre de paramètres caractéristiques relatifs et/ou de valeurs utilisés est élevé, plus le niveau d'authentification est ainsi durcit. La signature peut être aussi bien symbolique que l'écriture d'un mot, notamment du nom de la personne et/ou le dessin d'une figure.
- la signature corporelle : l'utilisateur doit savoir reproduire un geste ou une suite de geste précis. Le ou les paramètres caractéristiques relatifs sont alors la position et/ou la distance. Eventuellement, l'authentification peut être durcie en utilisant un paramètre caractéristique supplémentaire tel que l'appui sur une touche spécifique de la manette. Un exemple de signature corporelle est : bas gauche en haut, bras droit en bas (dans le cas d'utilisation de deux manettes ou de gants de réalité virtuelle), appui sur le bouton A de la manette ou une zone A de l'environnement virtuelle, et tête à droite (l'ensemble de ces gestes étant effectués simultanément ou successivement suivant la signature enregistrée).
- etc.

La figure 2a illustre un schéma simplifié d'un premier mode d'implémentation du dispositif d'authentification selon l'invention.

Dans ce premier mode d'implémentation, le dispositif d'authentification 61 est implémenté dans un troisième dispositif électronique 6 éventuellement distant du premier dispositif électronique 2. Si le troisième dispositif électronique 6 est distant, il est connecté au premier dispositif électronique 2 via un réseau de communication 5.

Le troisième dispositif électronique 6 est notamment un dispositif électronique personnel placé au domicile de l'utilisateur ou professionnel placé au bureau de l'utilisateur alors que l'utilisateur avec le premier dispositif électronique D' est situé à distance, notamment dans une résidence secondaire, une location, un hôtel ou dans les locaux d'un partenaire, etc. , ou un serveur de fourniture de services, tel qu'un site Internet, une application, un fournisseur de contenus (vidéo à la demande, Cloud, etc.)...

Dans l'exemple de la figure 2a, le premier dispositif électronique 2 est un casque autonome de réalité virtuel et le deuxième dispositif électronique 3 une manette ou un gant de réalité virtuel.

En particulier, le troisième dispositif électronique 6 comporte un dispositif de fourniture d'accès 62.

L'utilisateur U utilise le premier dispositif électronique 2 et le deuxième dispositif électronique 3 pour demander un accès à un service ou un produit à un dispositif de fourniture d'accès, par exemple le dispositif 62. Le dispositif de fourniture d'accès 62 requiert l'authentification *auth_req* de l'utilisateur U au dispositif d'authentification 61 selon l'invention.

Le dispositif d'authentification 61 reçoit et/ou détecte au moins une valeur d'au moins un paramètre caractéristique pc₂_vd, pc₃_vd ou d'au moins un paramètre caractéristique relatif pcr_{3/2}_vd, et si nécessaire, calcule au moins une valeur détectée d'au moins un paramètre caractéristique relatif pcr_{3/2}_vd. Puis, le dispositif d'authentification 61 vérifie si la au moins une valeur détectée d'au moins un paramètre caractéristique relatif pcr_{3/2}_vd correspond à la au moins une valeur mémorisée d'au moins un paramètre caractéristique relatif pcr_{3/2}_vm.

En particulier, si c'est le cas *ok_auth,* le dispositif d'authentification 61 active le dispositif de fourniture d'accès 62.

Le dispositif de fourniture d'accès 62 donne alors l'accès au produit ou service au premier dispositif électronique 2. Par exemple, le dispositif de fourniture d'accès 62 envoie un signal de reproduction *sr* au premier dispositif électronique 2 qui reproduit le service accédé et/ou un menu d'interaction avec le produit ou service accédé. Ainsi, le deuxième dispositif électronique 3 permet de transmettre un signal d'interaction si au dispositif de fourniture d'accès 62 en fonction du signal de reproduction sr reproduit par le premier dispositif électronique 2.

La figure 2b illustre un schéma simplifié d'un deuxième mode d'implémentation du dispositif d'authentification selon l'invention.

Dans ce deuxième mode d'implémentation, le dispositif d'authentification 21 est implémenté dans le premier dispositif électronique 2. Le premier dispositif électronique 2 de l'utilisateur U est connecté à un deuxième dispositif électronique 3. Le premier dispositif électronique 2 et le deuxième dispositif électronique 3 sont portables séparément par l'utilisateur U. Le premier dispositif électronique 2 comporte donc
- un dispositif d'authentification 21 de l'utilisateur du premier dispositif électronique 2 apte à vérifier si une valeur détectée d'un paramètre caractéristique relatif pcr_{3/2}_vd du deuxième dispositif électronique correspond à une valeur mémorisée de ce paramètre caractéristique relatif pcr_{3/2}_vm du deuxième dispositif électronique associée à un identifiant d'un utilisateur *uid* requérant une authentification *auth_req,* le paramètre caractéristique relatif correspondant au paramètre caractéristique du deuxième dispositif électronique mesuré relativement au paramètre caractéristique du premier dispositif électronique.

Dans l'exemple de la figure 2a, le premier dispositif électronique 2 est un smartphone et le deuxième dispositif électronique 3 une montre connectée. Le premier dispositif électronique 2 et le deuxième dispositif électronique 3 sont connectés notamment par un réseau local sans fil tel que Bluetooth.

L'utilisateur U utilise le premier dispositif électronique 2 et le deuxième dispositif électronique 3 pour demander un accès à un service ou un produit à un dispositif de fourniture d'accès. Par exemple, l'utilisateur U souhaite accéder à son smartphone ou à une application sur son smartphone 2. Dans ce cas, le dispositif de fourniture d'accès 22, 62 est implémenté respectivement dans le smartphone 2 ou dans un troisième dispositif 6 (non illustré sur la figure 2b).

Le dispositif de fourniture d'accès 22, 62 requiert l'authentification *auth_req* de l'utilisateur U au dispositif d'authentification 21 selon l'invention (notamment, tel qu'illustré par la figure 1).

Le dispositif d'authentification 21 reçoit et/ou détecte au moins une valeur d'au moins un paramètre caractéristique pc₂_vd (non illustré), pc₃_vd, et dans notre exemple de la figure 2b, calcule au moins une valeur détectée d'au moins un paramètre caractéristique relatif pcr_{3/2}_vd.Puis, le dispositif d'authentification 21 vérifie si la au moins une valeur détectée d'au moins un paramètre caractéristique relatif pcr_{3/2}_vd correspond à la au moins une valeur mémorisée d'au moins un paramètre caractéristique relatif pcr_{3/2}_vm.

En particulier, si c'est le cas *ok_auth,* le dispositif d'authentification 21 active le dispositif de fourniture d'accès 22, 62.

Le dispositif de fourniture d'accès 22, 62 donne alors l'accès au smartphone 2 ou au produit ou service au premier dispositif électronique 2.

Ainsi, l'utilisateur U du smartphone 2 placé dans un environnement public s'authentifie en réduisant les risques de piratage de son accès et en améliorant la fiabilité d'accès. En effet, l'utilisateur U ne saisissant pas de mot de passe, le risque de récupération du mot de passe par un tiers regardant par-dessus son épaule est réduit voire annulé d'autant plus, lorsque l'authentification selon l'invention est faite sur des distances entre le premier dispositif électronique et le deuxième dispositif électronique dépendant de la morphologie de l'utilisateur. Ces mesures étant simplifiées par rapport à la reconnaissance d'empreintes, de visages, non seulement leur fiabilité est supérieure, mais en plus le coût de calcul par le dispositif d'authentification est réduit.

La figure 2c illustre un schéma simplifié d'un troisième mode d'implémentation du dispositif d'authentification selon l'invention.

Dans ce troisième mode d'implémentation, le dispositif d'authentification 21 est implémenté soit dans un troisième dispositif électronique 24 dont le premier dispositif électronique 25c est un périphérique, soit directement dans le premier dispositif électronique 25c comportant un périphérique 25c, tel qu'un casque de réalité virtuelle ou augmentée. Le premier dispositif électronique 2, 25c de l'utilisateur U est connecté à un deuxième dispositif électronique 3. Le premier dispositif électronique ou périphérique 25c du premier dispositif électronique 2 et le deuxième dispositif électronique 3 sont portables séparément par l'utilisateur U.

Soit le premier dispositif électronique 2 soit le troisième dispositif électronique 24 comporte
- un dispositif d'authentification 21 de l'utilisateur du premier dispositif électronique 25c, 2 apte à vérifier si une valeur détectée d'un paramètre caractéristique relatif pcr_{3/2}_vd du deuxième dispositif électronique correspond à une valeur mémorisée de ce paramètre caractéristique relatif pcr_{3/2}_vm du deuxième dispositif électronique associée à un identifiant d'un utilisateur *uid* requérant une authentification *auth_req,* le paramètre caractéristique relatif correspondant au paramètre caractéristique du deuxième dispositif électronique mesuré relativement au paramètre caractéristique du premier dispositif électronique.

Le troisième dispositif électronique 24 est notamment un ordinateur personnel ou une tablette... doté d'un ou plusieurs périphériques : interface(s) de reproduction tel qu'un écran 25ₑ et, le cas échéant, un casque 25_{c} ; interface(s) d'entrée tel qu'un clavier 23_{c}, une souris 23ₛ... Dans l'exemple de la figure 2c, le deuxième dispositif électronique 3 est une montre connectée.

L'utilisateur U utilise le casque 25_{c} et le deuxième dispositif électronique 3 pour demander un accès à un service ou un produit à un dispositif de fourniture d'accès. Le dispositif de fourniture d'accès requiert l'authentification *auth_req* de l'utilisateur U au dispositif d'authentification 21 selon l'invention.

Le dispositif d'authentification 21 reçoit et/ou détecte au moins une valeur d'au moins un paramètre caractéristique pc₂_vd, pc₃_vd (non illustré) ou d'au moins un paramètre caractéristique relatif pcr_{3/2}_vd, et si nécessaire, calcule au moins une valeur détectée d'au moins un paramètre caractéristique relatif pcr_{3/2}_vd. Puis, le dispositif d'authentification 21 vérifie si la au moins une valeur détectée d'au moins un paramètre caractéristique relatif pcr_{3/2_}vd correspond à la au moins une valeur mémorisée d'au moins un paramètre caractéristique relatif pcr_{3/2}_vd.

En particulier, si c'est le cas *ok_auth,* le dispositif d'authentification 21 active le dispositif de fourniture d'accès.

Le dispositif de fourniture d'accès donne alors l'accès au produit ou service au premier dispositif électronique 2 qui reproduit la fourniture d'accès en utilisant au moins le casque 25_{c}.

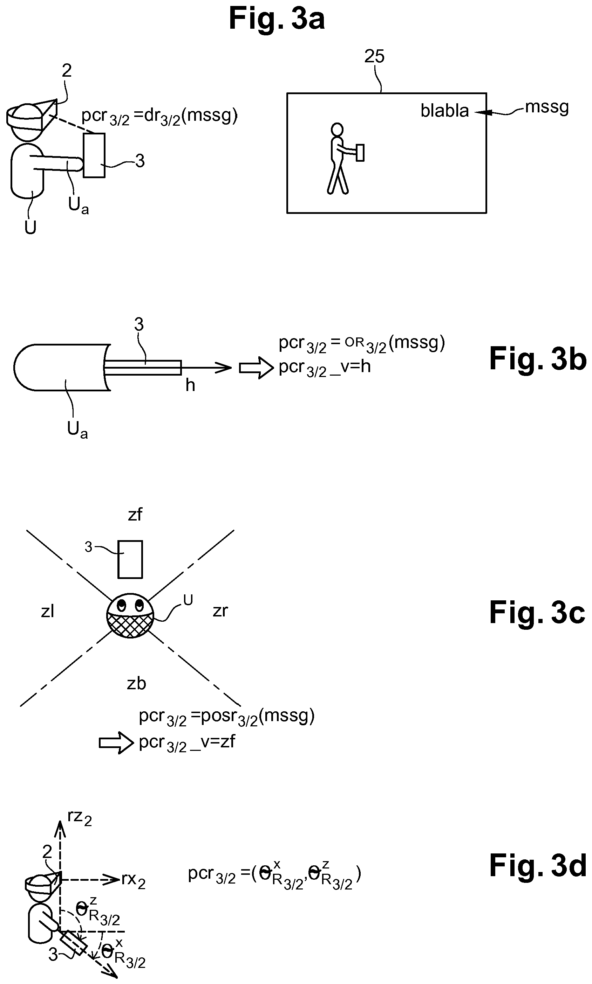

Les figures 3a à 3d montrent la mise en œuvre du dispositif d'authentification selon l'invention, notamment tel qu'illustré par la figure 1, pour différents paramètres caractéristiques.

En particulier, le paramètre caractéristique relatif *pcr*_{*3*/*2*} est constitué par au moins un des paramètres caractéristiques *pc* suivants :
- position relative posr_{3/2} du deuxième dispositif électronique par rapport au premier dispositif électronique ;
- distance relative dr_{3/2} du deuxième dispositif électronique par rapport au premier dispositif électronique ;
- orientation relative or_{3/2}, θr_{3/2} du deuxième dispositif électronique par rapport au premier dispositif électronique ;
- vitesse relative vr_{3/2} du deuxième dispositif électronique par rapport au premier dispositif électronique ;
- accélération ar_{3/2} relative du deuxième dispositif électronique par rapport au premier dispositif électronique.

La figure 3a illustre un schéma simplifié d'un premier exemple de paramètre caractéristique utilisé par le dispositif d'authentification 1 selon l'invention.

Un utilisateur U d'un premier dispositif électronique 2, par exemple un casque autonome de réalité virtuelle, et d'un deuxième dispositif électronique 3, par exemple un périphérique du premier dispositif électronique 2 tels qu'une manette d'interaction ou des vêtements de réalité virtuelle : gants, mitaines, chaussons, etc. portés par l'utilisateur U reçoit un message de demande d'authentification *mssg.* Le premier

En particulier, le message de demande d'authentification *mssg* est reproduit par le premier dispositif électronique 2, par exemple affiché sur un écran 25 du premier dispositif électronique 2. La figure 3a montre un message de demande d'authentification *mssg* avec un texte « blabla » et éventuellement un contenu : image ou video. Le message de demande d'authentification *mssg* comporte notamment des indications de posture et/ou de comportement de l'utilisateur pour l'authentification. Dans notre exemple, le message de demande d'authentification *mssg* indique que l'utilisateur doit placer son bras tenant la manette 3 tendu droit devant lui.

Dans l'exemple de la figure 3a, le premier dispositif d'authentification 1 utilise alors comme paramètre caractéristique un paramètre de distance permettant de comparer la valeur détectée du paramètre caractéristique relatif constitué par la distance relative du deuxième dispositif électronique, c'est-à-dire la distance entre le premier dispositif électronique 2 et le deuxième dispositif électronique 3, dans la posture demandé par le message de demande d'authentification *mssg* : pcr_{3/2} = posr_{3/2} (mssg) à une valeur mémorisée préalablement à la demande d'authentification.

La figure 3b illustre un schéma simplifié d'un deuxième exemple de paramètre caractéristique utilisé par le dispositif d'authentification selon l'invention.

Dans l'exemple de la figure 3b, le premier dispositif d'authentification 1 utilise alors comme paramètre caractéristique un paramètre d'orientation permettant de comparer la valeur détectée pcr_{3/2}_vd= h du paramètre caractéristique relatif constitué par l'orientation relative du deuxième dispositif électronique, c'est-à-dire une orientation relative entre le premier dispositif électronique 2 et le deuxième dispositif électronique 3, en fonction du message de demande d'authentification *mssg* : pcr_{3/2} = or_{3/2}(mssg) à une valeur mémorisée préalablement à la demande d'authentification. En l'occurrence la valeur détectée pcr_{3/2}_vd est une orientation horizontale h du deuxième dispositif électronique 3 sachant que la référence est l'orientation du porteur du casque 2. Cette orientation du deuxième dispositif électronique 3 est obtenue par une action de l'utilisateur qui modifie notamment la position de son bras Ua et de la manette 3 en fonction du message de demande d'authentification *mssg* reçu.

En particulier, le dispositif d'authentification 1 vérifie la correspondance de valeurs successives détectées du paramètre caractéristique relatif avec des valeurs successives mémorisées. Dans ce cas, le message de demande d'authentification *mssg* peut indiquer à l'utilisateur de ce mettre dans la nième posture de la succession de postures d'authentification soit dans l'ordre de mémorisation, soit dans un ordre aléatoire.

La figure 3c illustre un schéma simplifié d'un troisième exemple de paramètre caractéristique utilisé par le dispositif d'authentification selon l'invention.

Dans l'exemple de la figure 3c, le premier dispositif d'authentification 1 utilise alors comme paramètre caractéristique un paramètre de position permettant de comparer la valeur détectée pcr_{3/2}_vd= h du paramètre caractéristique relatif constitué par la position relative du deuxième dispositif électronique, c'est-à-dire une position relative entre le premier dispositif électronique 2 et le deuxième dispositif électronique 3, en fonction du message de demande d'authentification *mssg* : pcr_{3/2} = zr_{3/2}(mssg) à une valeur mémorisée préalablement à la demande d'authentification. En l'occurrence la valeur détectée pcr_{3/2}_vd correspond à une zone frontale fh du deuxième dispositif électronique 3 sachant que la référence est la position du porteur du casque 2. Cette position du deuxième dispositif électronique 3 est obtenue par une action de l'utilisateur qui modifie notamment la position de la manette 3 en fonction du message de demande d'authentification *mssg* reçu.

En particulier, la position est définie par quatre zones prédéfinie autour de l'utilisateur dans un espace bidimensionnelle : zone frontale zf, zone arrière zb, zone latérale droit zr et zone latérale gauche zl comme illustrées par la figure 3c ou par 6 zones dans un espace tridimensionnelles : outre les zones vues pour l'espace bidimensionnelles zf, zb, zr, zl, la zone supérieure za et la zone inférieure zi.

En particulier, la position est définie par plusieurs zones codées en utilisant les quatre points cardinaux : nord, sud, ouest et est. Par exemple, en définissant une sphère autour du premier dispositif électronique porté par l'utilisateur, la demi-sphère supérieure constitue la zone nord, la demi-sphère inférieure la zone sud en dessous, la demi-sphère droite constitue la zone est et la demi-sphère gauche constitue la zone ouest (non illustrée). Ainsi, la position du deuxième dispositif électronique pourra être indiqué par des codes de types NE pour nord-est s'il est placé dans le quart de sphère supérieure droite, voire NNE pour nord-nord-est s'il est placé dans une section supérieure du quart de sphère supérieure droite.

En particulier, le dispositif d'authentification 1 vérifie la correspondance de valeurs successives détectées du paramètre caractéristique relatif avec des valeurs successives mémorisées. Dans ce cas, le message de demande d'authentification *mssg* peut indiquer à l'utilisateur de ce mettre dans la nième posture de la succession de position d'authentification soit dans l'ordre de mémorisation, soit dans un ordre aléatoire.

La figure 3d illustre un schéma simplifié d'un quatrième exemple de paramètre caractéristique utilisé par le dispositif d'authentification selon l'invention.

Dans l'exemple de la figure 3d, le premier dispositif d'authentification 1 utilise alors comme paramètre caractéristique un paramètre d'orientation permettant de comparer la valeur détectée pcr_{3/2}_vd= θr_{3/2}_vd du paramètre caractéristique relatif constitué par l'orientation relative du deuxième dispositif électronique, c'est-à-dire une orientation relative entre le premier dispositif électronique 2 et le deuxième dispositif électronique 3, en fonction du message de demande d'authentification *mssg* : pcr_{3/2} = θr _{3/2}(mssg) à une valeur mémorisée préalablement à la demande d'authentification. En l'occurrence la valeur détectée pcr_{3/2}_vd est une orientation avec un angle déterminé θr_{3/2} du deuxième dispositif électronique 3 sachant que la référence est l'orientation du porteur du casque 2. Cette orientation du deuxième dispositif électronique 3 est obtenue par une action de l'utilisateur qui modifie notamment la position de son bras Ua et de la manette 3 en fonction du message de demande d'authentification *mssg* reçu.

La référence peut être dans un espace bidimensionnel ou tridimensionnelle comme illustré par la figure 3D. En l'occurrence, le premier dispositif électronique 2 étant un casque, l'angle du deuxième dispositif 2 est détecté par rapport à un plan horizontal de vue rx₂ qui donne un premier angle, dit angle longitudinale θ^{x}r_{3/2}, et/ou par rapport à un plan vertical correspondant à l'utilisateur rz₂ qui donne un deuxième angle, dit angle longitudinale θ^{z}r_{3/2}. Alors, le paramètre caractéristique relatif est un couple d'angle pcr_{3/2} = (θ^{x}r_{3/2}, θ^{z}r_{3/2}).

En particulier, le dispositif d'authentification 1 vérifie la correspondance de valeurs successives détectées du paramètre caractéristique relatif avec des valeurs successives mémorisées. Dans ce cas, le message de demande d'authentification *mssg* peut indiquer à l'utilisateur de se mettre dans la nième posture de la succession de postures d'authentification soit dans l'ordre de mémorisation, soit dans un ordre aléatoire.

En particulier, les différentes postures sont enchainées avec un rythme, une vitesse et/ou des accélérations pouvant aussi faire l'objet d'une détection et constituées des paramètres caractéristiques.

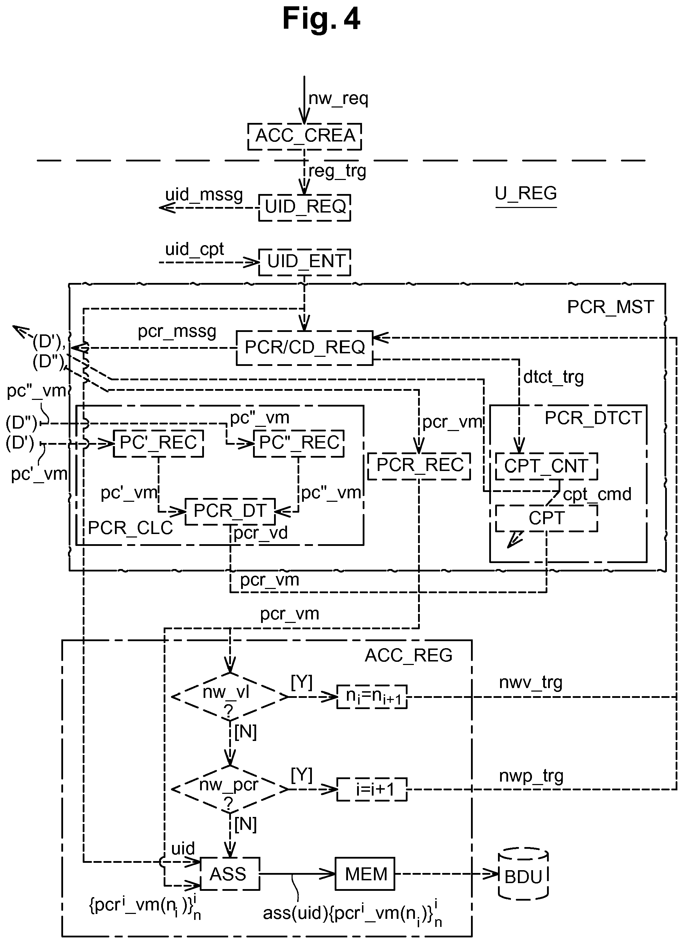

La figure 4 illustre un schéma simplifié d'un procédé d'enregistrement d'un utilisateur selon l'invention.

Le procédé d'enregistrement U_REG d'un utilisateur U d'un premier dispositif électronique D' connecté à un deuxième dispositif électronique D' permet d'enregistrer un compte utilisateur en lien avec un accès sécurisé à un produit ou un service. Le premier dispositif électronique D' et le deuxième dispositif électronique D' étant portables séparément par l'utilisateur U. Le procédé d'enregistrement U_REG comportant
- mémoriser MEM en association avec un identifiant de l'utilisateur *uid* au moins une valeur d'un paramètre caractéristique relatif du deuxième dispositif électronique pcr_vm, le paramètre caractéristique relatif pcr correspondant au paramètre caractéristique du deuxième dispositif électronique pc" mesuré relativement au paramètre caractéristique du premier dispositif électronique pc'.

En particulier, le procédé d'enregistrement U_REG comporte
- mesurer PCR_MST au moins une valeur du paramètre caractéristique relatif du deuxième dispositif électronique pcr_vm, la valeur mesurée pcr_vm étant mémorisée MEM directement ou indirectement.

En particulier, le procédé d'enregistrement U_REG comporte
- calculer PCR_DT une valeur statistique du paramètre caractéristique relatif du deuxième dispositif électronique, la valeur statistique pcr_vm étant mémorisée MEM.

En particulier, un procédé d'accès à un service ou un dispositif reçoit une première demande d'accès ou une demande de génération d'un compte d'accès *nw_req.* Notamment, le procédé d'accès (non illustré) comporte une création d'accès ACC_CREA qui déclenche *reg_trg* l'enregistrement de l'utilisateur U_REG.

En particulier, le procédé d'enregistrement d'utilisateur U_REG comporte la création d'accès ACC_CREA, notamment lorsque le procédé d'accès met en œuvre les étapes du procédé d'enregistrement U_REG.

En particulier, le procédé d'enregistrement comporte une demande d'identifiant utilisateur UID_REQ qui envoie un message d'identification *uid_mssg* à destination de l'utilisateur U. Le message d'identification *uid_mssg* est notamment apte à être reproduit par une interface de reproduction.

Suite à la reproduction du message d'identification *uid_mssg,* l'utilisateur fournit à une interface d'entrée, tel qu'une interface de saisie : clavier, souris, stylet, écran tactile... ou un capteur : caméra, microphone... un identifiant utilisateur *uid.* L'identifiant utilisateur *uid* est notamment un nom, un pseudo, une adresse email, un identifiant de terminal de l'utilisateur tel qu'un numéro de téléphone...

En particulier, le procédé d'enregistrement U_REG comporte une entrée de l'identifiant utilisateur UID_ENT recevant un signal *uid_cpt* de l'interface d'entrée comportant un identifiant de l'utilisateur *uid.*

En particulier, la mesure PCR_MST d'au moins une valeur du paramètre caractéristique relatif du deuxième dispositif électronique comporte une requête de fourniture du code d'accès, aussi nommé code d'authentification, PCR/CD_REQ qui envoie un message d'enregistrement d'un code d'authentification *pcr_mssg* à destination de l'utilisateur U. Le message d'enregistrement d'un code d'authentification *pcr_mssg* est notamment apte à être reproduit par une interface de reproduction.

En particulier, le procédé d'enregistrement U_REG comporte une réception d'au moins un paramètre caractéristique relatif PCR_REC. Notamment, la mesure PCR_MST comporte la réception d'au moins un paramètre caractéristique relatif PCR_REC.

En particulier, le procédé d'enregistrement U_REG comporte une détection d'au moins un paramètre caractéristique relatif PCR_DTC déclenchée *dtct_trg* notamment par la requête de fourniture du code d'authentification PCR/CD_REQ. Notamment, la mesure PCR_MST comporte la détection d'au moins un paramètre caractéristique relatif PCR_DTC.

En particulier, la détection d'au moins un paramètre caractéristique relatif PCR_DTC comporte une capture de paramètre caractéristique relatif CPT. La détection d'au moins un paramètre caractéristique relatif PCR_DTC comporte notamment un contrôle de capture CPT_CNT commandant *cpt_cmd* la capture CPT et/ou un ou plusieurs captures mises en œuvre par le premier dispositif électronique D' et/ou le deuxième dispositif électronique D".

En particulier, le procédé d'enregistrement U_REG comporte un calcul d'au moins un paramètre caractéristique relatif PCR_CLC. Notamment, la mesure PCR_MST comporte le calcul d'au moins un paramètre caractéristique relatif PCR_CLC.

En particulier, le calcul d'au moins un paramètre caractéristique relatif PCR_CLC comporte une réception PC'_REC d'un premier paramètre caractéristique PC' provenant du premier dispositif électronique D', une réception PC"_REC d'un deuxième paramètre caractéristique PC" provenant du deuxième dispositif électronique D", et une détermination du paramètre caractéristique relatif PCR_DT en fonction des valeurs détectées reçues pc'_vm et pc"_vm.

En particulier, le procédé d'enregistrement U_REG comporte un enregistrement du code d'accès ACC_REG qui comporte la mémorisation MEM. Notamment, le procédé d'enregistrement U_REG, en particulier, l'enregistrement du code d'accès ACC_REG, comporte, préalablement à la mémorisation MEM, une association ASS d'une ou plusieurs valeurs mesurées d'un ou plusieurs paramètres caractéristiques relatifs ${\left\{{pcr}^{i}_vm\left(n\right)\right\}}_{n = 1 … N}^{i = 1 … I}$ avec l'identifiant utilisateur entré *uid.*

En particulier, l'enregistrement du code d'accès ACC_REG vérifie si le code d'accès nécessite une valeur du paramètre caractéristique relatif en plus *nw_vl* ? de la valeur mesurée *pcr_vm.* Si oui [Y], une nouvelle mesure du paramètre caractéristique relatif est déclenchée *nwv_trg* en itérant *n= n+1* le paramètre caractéristique relatif *pcr_vm(n).*

En particulier, l'enregistrement du code d'accès ACC_REG vérifie si le code d'accès nécessite une valeur d'un autre paramètre caractéristique relatif en plus *nw_pcr* ? de la valeur mesurée *pcr_vm.* Si oui [Y], une mesure d'un nouveau paramètre caractéristique relatif est déclenchée *nwp_trg* en itérant *i= i+1 le* type de paramètre caractéristique relatif pcrⁱ_vm. Sinon, l'ensemble des valeurs mesurées ${\left\{{pcr}^{i}_vm\left(n\right)\right\}}_{n = 1 … N}^{i = 1 … I}$ sont fournies directement à la mémorisation MEM pour être mémorisé en association avec l'identifiant d'utilisateur *uid.*

Dans le cas où plusieurs valeurs de plusieurs paramètres caractéristiques sont utilisées pour le code d'accès, si le code d'accès ne nécessite pas [N] une valeur du paramètre caractéristique relatif en plus *nw_vl* ? de la valeur mesurée *pcr_vm,* alors la vérification de l'itération du type de paramètre caractéristique *nw_pcr* ? est mise en œuvre.

En particulier, les valeurs mesurées des paramètres caractéristiques relatifs ${\left\{{pcr}^{i}_vm\left(n\right)\right\}}_{n = 1 … N}^{i = 1 … I}$ sont mémorisés dans une base de données utilisateurs BDU.

En particulier, le dispositif d'authentification 1 selon l'invention et/ou un dispositif de fourniture d'accès 62 met en œuvre les étapes du procédé d'enregistrement U_REG.

Un mode de réalisation du procédé d'enregistrement U_REG est un programme comprenant des instructions de code de programme pour l'exécution des étapes du procédé d'enregistrement lorsque ledit programme est exécuté par un processeur.

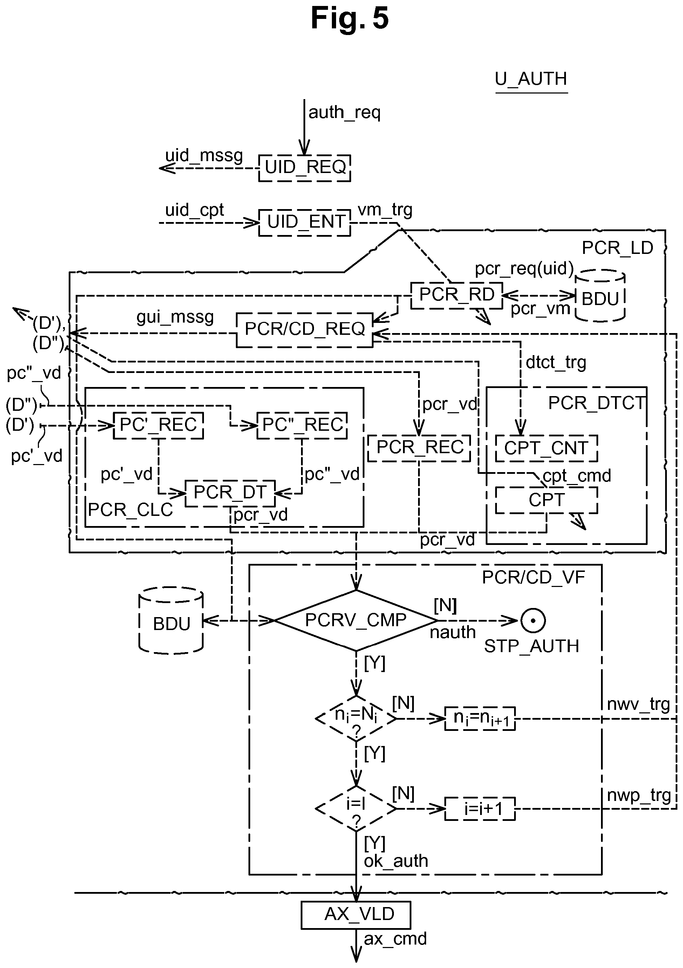

La figure 5 illustre un schéma simplifié d'un procédé d'authentification selon l'invention.

Le procédé d'authentification d'un utilisateur U_AUTH d'un premier dispositif électronique D' connecté à un deuxième dispositif électronique D" permet d'authentifier l'utilisateur U notamment lors d'un accès à un dispositif ou un service. Le premier dispositif électronique D' et le deuxième dispositif électronique D" étant portables séparément par l'utilisateur U. Le procédé d'authentification U_AUTH comporte
- vérifier PCRV_CMP si une valeur détectée d'un paramètre caractéristique relatif du deuxième dispositif électronique *pcr_vd* correspond à une valeur mémorisée de ce paramètre caractéristique relatif du deuxième dispositif électronique pcr_vm associée à un identifiant d'un utilisateur *uid* requérant une authentification *auth_req,* le paramètre caractéristique relatif pcr correspondant au paramètre caractéristique du deuxième dispositif électronique pc" mesuré relativement au paramètre caractéristique du premier dispositif électronique pc'.

En particulier, le procédé d'authentification U_AUTH comporte
- récupéré PCR_LD au moins une valeur détectée du paramètre caractéristique relatif du deuxième dispositif électronique *pcr_vd,* la valeur détectée *pcr_vd* étant vérifiée PCR_CMP.

En particulier, le procédé d'authentification U_AUTH comporte
- calculer PCR_DT une valeur détectée du paramètre caractéristique relatif du deuxième dispositif électronique *ρcr_vd* à partir d'une valeur détectée du paramètre caractéristique du premier dispositif électronique *pc'_vd* et d'une valeur détectée du paramètre caractéristique du premier dispositif électronique *pc"_vd,* la valeur statistique *pcr_vd* étant mémorisée vérifiée PCR_CMP.

En particulier, un procédé d'accès à un service ou un dispositif reçoit une demande d'accès *acc_req* (non illustrée). Notamment, la demande d'accès déclenche une requête d'authentification *auth_req* préalable à fourniture de l'accès par le procédé d'accès.

En particulier, le procédé d'authentification U_AUTH comporte une réception d'une requête d'authentification AUTH_REC (non illustré).

En particulier, le procédé d'authentification U_AUTH comporte une demande d'identifiant utilisateur UID_REQ qui envoie un message d'identification *uid_mssg* à destination de l'utilisateur U. Le message d'identification *uid_mssg* est notamment apte à être reproduit par une interface de reproduction. La demande d'identifiant utilisateur UID_REQ est notamment déclenchée par la requête d'authentification *auth_req.*

Suite à la reproduction du message d'identification *uid_mssg,* l'utilisateur fournit à une interface d'entrée, tel qu'une interface de saisie : clavier, souris, stylet, écran tactile... ou un capteur : caméra, microphone... un identifiant utilisateur *uid.* L'identifiant utilisateur *uid* est notamment un nom, un pseudo, une adresse email, un identifiant de terminal de l'utilisateur tel qu'un numéro de téléphone...

En particulier, le procédé d'authentification U_AUTH comporte une entrée de l'identifiant utilisateur UID_ENT recevant un signal *uid_cpt* de l'interface d'entrée comportant un identifiant de l'utilisateur *uid.*

En particulier, la récupération PCR_LD d'au moins une valeur du paramètre caractéristique relatif du deuxième dispositif électronique comporte une requête de fourniture du code d'accès, aussi nommé code d'authentification, PCR/CD_REQ qui envoie un message de guidage *gui_mssg* à destination de l'utilisateur U. Le message de guidage *gui_mssg* est notamment apte à être reproduit par une interface de reproduction.

En particulier, la récupération PCR_LD comporte une lecture PCR_RD des valeurs mémorisées de paramètres caractéristiques relatif pcr_vm associées à l'identifiant utilisateur entré *uid.* Notamment, la lecture PCR_RD est déclenché *vm_trg* par l'entrée de l'identifiant utilisateur UID_ENT.

En particulier, la lecture PCR_REQ envoie une requête de paramètres caractéristiques relatifs associés *pcr_req*(uid) à un dispositif mémoire tel qu'une base de données utilisateurs BDU dans laquelle des valeurs ont été préalablement mémorisées. En réponse, la lecture PCR_REQ reçoit de la base de données utilisateurs BDU des valeurs de paramètres caractéristiques relatifs associés pcr_vm.

En particulier, la lecture PCR_REQ transmet des valeurs de paramètres caractéristiques relatifs associés pcr_vm lues à la requête de fourniture du code d'accès PCR/CD_REQ. Notamment, la requête de fourniture du code d'accès PCR/CD_REQ génère un message de guidage *gui_mssg* en fonction du ou des paramètres caractéristiques pcr dont les valeurs pcr_vm ont été lues.

Ainsi, l'utilisateur U peut être guidé par le message de guidage *gui_mssg* pour obtenir les paramètres caractéristiques relatifs constituant le code d'accès.

En particulier, le procédé d'authentification U_AUTH comporte une réception d'au moins un paramètre caractéristique relatif PCR_REC. Notamment, la récupération PCR_LD comporte la réception d'au moins un paramètre caractéristique relatif PCR_REC.

En particulier, le procédé d'authentification U_AUTH comporte une détection d'au moins un paramètre caractéristique relatif PCR_DTC déclenchée *dtct_trg* notamment par la requête de fourniture du code d'authentification PCR/CD_REQ. Notamment, la récupération PCR_LD comporte la détection d'au moins un paramètre caractéristique relatif PCR_DTC.

En particulier, la détection d'au moins un paramètre caractéristique relatif PCR_DTC comporte une capture de paramètre caractéristique relatif CPT. La détection d'au moins un paramètre caractéristique relatif PCR_DTC comporte notamment un contrôle de capture CPT_CNT commandant *cpt_cmd* la capture CPT et/ou un ou plusieurs captures mises en œuvre par le premier dispositif électronique D' et/ou le deuxième dispositif électronique D".

En particulier, le procédé d'authentification U_AUTH comporte un calcul d'au moins un paramètre caractéristique relatif PCR_CLC. Notamment, la récupération PCR_LD comporte le calcul d'au moins un paramètre caractéristique relatif PCR_CLC.

En particulier, le calcul d'au moins un paramètre caractéristique relatif PCR_CLC comporte une réception PC'_REC d'un premier paramètre caractéristique PC' provenant du premier dispositif électronique D', une réception PC"_REC d'un deuxième paramètre caractéristique PC" provenant du deuxième dispositif électronique D", et une détermination du paramètre caractéristique relatif PCR_DT en fonction des valeurs détectées reçues *pc'_vd* et *pc"_vd.*

En particulier, le procédé d'authentification U_AUTH comporte une vérification du code d'accès PCR/CD_VF qui comporte la vérification de valeurs PCRV_CMP.

En particulier, la vérification du code d'accès PCR/CD_VF vérifie si toutes les valeurs du code ont été détectées nᵢ=Nᵢ ?. Si non [N], une récupération PCR_LD d'une nouvelle valeur du paramètre caractéristique relatif est déclenchée nwv_trg en itérant nᵢ= nᵢ +1 la valeur du paramètre caractéristique relatif pcr_vm(nᵢ).

En particulier, la vérification du code d'accès PCR/CD_VF vérifie si les valeurs de tous les paramètres caractéristiques relatif ont été détectée i= I ?. Si non [N], une récupération PCR_LD d'une valeur d'un nouveau paramètre caractéristique relatif est déclenchée nwp_trg en itérant en itérant i= i+1 le type de paramètre caractéristique relatif pcrⁱ_vm. Sinon [Y], la vérification du code d'accès PCR/CD_VF indique que l'authentification est réussie *ok_auth.*

Dans le cas où plusieurs valeurs de plusieurs paramètres caractéristiques sont utilisées pour le code d'accès, si le code d'accès nécessite [Y] une valeur du paramètre caractéristique relatif en plus nᵢ=Nᵢ ? de la valeur mesurée pcr_vm(nᵢ), alors la vérification de l'itération du type de paramètre caractéristique *i=I* ? est mise en oeuvre.

En particulier, si la vérification de valeur PCRV_COMP est positive [Y], c'est-à-dire si une valeur détectée d'un paramètre caractéristique relatif correspond à la valeur mémorisée du paramètre caractéristique relatif : ${pcr}^{i} _ vd \left({n}_{i}\right) = {pcr}_{vm \left({n}_{i}\right)}^{i}$ alors la vérification du nombre de valeurs détectées du paramètre caractéristique relatif nᵢ=Nᵢ ? est effectuée.

Sinon, c'est-à-dire si la vérification de valeur PCRV_COMP est négative [N], si au moins une valeur détectée d'au moins paramètre caractéristique relatif ne correspond pas à la valeur mémorisée du paramètre caractéristique relatif du code d'accès: ${pcr}^{i} _ vd \left({n}_{i}\right) \neq {pcr}_{vm \left({n}_{i}\right)}^{i}$ alors la vérification de valeur PCRV_COMP indique un échec d'authentification *nauth.*

En particulier, la vérification de valeur PCRV_COMP lit une valeur mémorisée pcr_vm en fonction de la valeur détectée de paramètre caractéristique relatif *pcr_vd* dans une base de données utilisateurs BDU. De manière alternative, la vérification de valeur PCRV_COMP reçoit une valeur mémorisée pcr_vm de la lecture PCR_RD.

En particulier, l'échec d'authentification *nauth* clôt SPT_AUTH le procédé d'authentification U_AUTH. Eventuellement, la clôture d'authentification STP_AUTH envoie un message d'échec reproduit par le premier dispositif électronique D' à destination de l'utilisateur.

En particulier, la clôture d'authentification STP_AUTH réinitialise le procédé d'authentification U_AUTH qui recommence alors par la requête d'identifiant utilisateur UID_REQ et/ou la récupération de code d'accès PCR_LD et/ou la requête de fourniture du code d'authentification PCR/CD_REQ.

En particulier, l'indication d'authentification réussie *ok_auth* est fournie à un procédé d'accès AXP (non illustrés), notamment un procédé d'accès AXP ayant envoyé la demande d'authentification *auth_req* au procédé d'authentification U_AUTH.

En particulier, l'indication d'authentification réussie *ok_auth* déclenche une validation d'un accès AX_VLD à un service ou un dispositif. Notamment, un procédé d'accès AXP (non illustrés), tel qu'un procédé d'accès AXP ayant envoyé la demande d'authentification *auth_req* au procédé d'authentification U_AUTH, comporte la validation d'accès AX_VLD. La validation d'accès AX_VDL commande *ax_cmd* l'accès AXP par le dispositif requérant un accès, dans notre invention le premier dispositif électronique D', à un dispositif ou service.

En particulier, le dispositif d'authentification 1 selon l'invention et/ou un dispositif de fourniture d'accès 62 met en œuvre les étapes du procédé d'authentification U_AUTH.

Un mode de réalisation du procédé d'authentification U_AUTH est un programme comprenant des instructions de code de programme pour l'exécution des étapes du procédé d'authentification U_AUTH lorsque ledit programme est exécuté par un processeur.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Dispositif d'authentification d'un utilisateur (U) d'un premier dispositif électronique (2) connecté à un deuxième dispositif électronique (3), le premier dispositif électronique (2) et le deuxième dispositif électronique (3) étant portables séparément par l'utilisateur (U), le dispositif d'authentification (1, 21) comportant
- un analyseur (11) apte à vérifier si une valeur détectée d'un paramètre caractéristique relatif (prc_{3/2}_vd) du deuxième dispositif électronique correspond à une valeur mémorisée de ce paramètre caractéristique relatif (prc_{3/2}_vm) du deuxième dispositif électronique associée à un identifiant (uid) d'un utilisateur (U) requérant une authentification (auth_req), le paramètre caractéristique relatif (prc_{3/2}) correspondant au paramètre caractéristique du deuxième dispositif électronique (prc₃) mesuré relativement au paramètre caractéristique du premier dispositif électronique (prc₂).

2. Dispositif d'authentification selon la revendication précédente, dans lequel l'analyseur (11) est apte à vérifier si une série de valeurs détectées d'un paramètre caractéristique relatif ({pcr_{3/2}_vd(n)}_{n=1...N}) du deuxième dispositif électronique correspond à une série de valeurs mémorisée ({pcr_{3/2_}vm(n)}_{n=1...N}) de ce paramètre caractéristique relatif du deuxième dispositif électronique associée à un identifiant (uid) d'un utilisateur requérant une authentification.

3. Dispositif d'authentification selon l'une quelconque des revendications précédentes, dans lequel l'analyseur (11) est apte à vérifier les valeurs de plusieurs paramètres caractéristiques relatifs ( ${\left\{{pcr}_{3 / 2}^{i}_vd\right\}}^{i = 1 … I} , {\left\{{pcr}_{3 / 2}^{i}_vd\left(n\right)\right\}}_{n = 1 … N}^{i = 1 … I}$ ) d'au moins un deuxième dispositif électronique (3).

4. Dispositif d'authentification selon l'une quelconque des revendications précédentes, le dispositif d'authentification (1, 21) comportant au moins un parmi les dispositifs de fourniture (10) de paramètre caractéristique relatif du deuxième dispositif électronique (3)
- un détecteur (10_{D}) de paramètre caractéristique relatif du deuxième dispositif électronique,
- un récepteur (100_{R}) d'une valeur détectée du paramètre caractéristique relatif (pcr_{3/2}_vd) du deuxième dispositif électronique, le récepteur (100_{R}) recevant une valeur (pcr_{3/2}_vd) provenant d'un détecteur (300D) de paramètre caractéristique relatif du deuxième dispositif électronique implémenté dans le deuxième dispositif électronique (3),
- un récepteur (100_{R}) d'une valeur détectée du paramètre caractéristique relatif (pcr_{3/2}_vd) du deuxième dispositif électronique, le récepteur (100_{R}) recevant une valeur (pcr_{3/2}_vd) provenant d'un détecteur (200D) de paramètre caractéristique relatif du deuxième dispositif électronique implémenté dans le premier dispositif électronique (2)
- un calculateur (10_{R}) d'une valeur détectée du paramètre caractéristique relatif (pcr_{3/2}_vd) du deuxième dispositif électronique comportant :
+ un récepteur (100_{R}) d'une valeur détectée du paramètre caractéristique du deuxième dispositif électronique (pc₃_vd) provenant du deuxième dispositif électronique (3) et d'une valeur détectée du paramètre caractéristique du premier dispositif électronique (pc₂_vd) provenant du premier dispositif électronique (2), et
+ un calculateur élémentaire (101_{R}) apte à déterminer une valeur du paramètre caractéristique relatif (pcr_{3/2}_vd) du deuxième dispositif électronique en fonction de la valeur détectée reçue du paramètre caractéristique du deuxième dispositif électronique (pc₃_vd) et de la valeur détectée reçue du paramètre caractéristique du premier dispositif électronique (pc₂_vd).

5. Dispositif d'authentification selon la revendication précédente, dans lequel le détecteur (10_{D}) comporte
- un contrôleur (102) apte à commander (cpt_cmd) au moins un capteur (200_{D}, 300_{D}) distant de valeurs du paramètre caractéristique (pcr_{3/2}_vd) d'un dispositif distant (2,3), le capteur (200_{D}, 300_{D}) étant implémenté dans le dispositif distant (2,3).

6. Dispositif d'authentification selon l'une quelconque des revendications 4 ou 5, dans lequel le détecteur (10_{D}) comporte
- un capteur (100_{D}) apte à mesurer une valeur du paramètre caractéristique relatif du deuxième dispositif électronique (pcr_{3/2}_vd).

7. Dispositif d'authentification selon l'une quelconque des revendications précédentes, le paramètre caractéristique relatif (pcr_{3/2}_vd) étant constitué par au moins un des paramètres caractéristiques suivants :
- position relative (posr_{3/2}) du deuxième dispositif électronique par rapport au premier dispositif électronique ;
- distance relative (dr_{3/2}) du deuxième dispositif électronique par rapport au premier dispositif électronique ;
- orientation relative (or_{3/2}) du deuxième dispositif électronique par rapport au premier dispositif électronique ;
- vitesse relative (vr_{3/2}) du deuxième dispositif électronique par rapport au premier dispositif électronique ;
- accélération relative (ar_{3/2}) du deuxième dispositif électronique par rapport au premier dispositif électronique.

8. Dispositif d'authentification selon l'une quelconque des revendications précédentes, le premier dispositif électronique (2) étant constitué par un parmi des dispositifs principaux portables suivants :
- un terminal de communication portable ;
- une tablette ;
- une console portable ;
- un casque de réalité virtuelle;
- un casque de réalité augmenté.

9. Dispositif d'authentification selon l'une quelconque des revendications précédentes, le deuxième dispositif électronique (3) étant constitué par un parmi des dispositifs secondaires portables suivants :
- un périphérique portable ;
- un objet connecté portable ;
- une manette de réalité virtuelle ;
- une manette de réalité augmenté.

10. Premier dispositif électronique d'un utilisateur, le premier dispositif électronique (2) de l'utilisateur (U) étant connecté à un deuxième dispositif électronique (3), le premier dispositif électronique (2) et le deuxième dispositif électronique (3) étant portables séparément par l'utilisateur (U) , le premier dispositif électronique (2) comportant
- un dispositif d'authentification (21) selon l'une des revendications 1-9.

11. Procédé d'authentification d'un utilisateur (U) d'un premier dispositif électronique (D') connecté à un deuxième dispositif électronique (D"), le premier dispositif électronique (D') et le deuxième dispositif électronique (D") étant portables séparément par l'utilisateur (U), le procédé d'authentification (U_AUTH) comportant
- vérifier (PCRV_CMP) si une valeur détectée d'un paramètre caractéristique relatif du deuxième dispositif électronique (pcr_vd) correspond à une valeur mémorisée de ce paramètre caractéristique relatif du deuxième dispositif électronique (pcr_vm) associée à un identifiant (uid) d'un utilisateur requérant une authentification (auth_req), le paramètre caractéristique relatif (pcr) correspondant au paramètre caractéristique du deuxième dispositif électronique (pc") mesuré relativement au paramètre caractéristique du premier dispositif électronique (pc').

12. Procédé d'enregistrement d'un utilisateur (U) d'un premier dispositif électronique (D') connecté à un deuxième dispositif électronique (D"), le premier dispositif électronique (D') et le deuxième dispositif électronique (D") étant portables séparément par l'utilisateur (U), le procédé d'enregistrement (U_REG) comportant
- mémoriser (MEM) en association avec un identifiant (uid) de l'utilisateur au moins une valeur d'un paramètre caractéristique relatif du deuxième dispositif électronique (pcr_vm), le paramètre caractéristique relatif (pcr) correspondant au paramètre caractéristique du deuxième dispositif électronique (pc") mesuré relativement au paramètre caractéristique du premier dispositif électronique (pc').

13. Procédé d'enregistrement selon la revendication précédente, le procédé d'enregistrement (U_REG) comportant
- mesurer (PCR_MST) au moins une valeur du paramètre caractéristique relatif du deuxième dispositif électronique (pcr_vm), la valeur mesurée (pcr_vm) étant mémorisée (MEM) directement ou indirectement.

14. Procédé d'enregistrement selon la revendication précédente, le procédé d'enregistrement (U_REG) comportant
- calculer (PCR_DT) une valeur statistique du paramètre caractéristique relatif du deuxième dispositif électronique, la valeur statistique (pcr_vm) étant mémorisée (MEM).

15. Programme comprenant des instructions de code de programme pour l'exécution des étapes du procédé d'authentification selon la revendication 11 et/ou du procédé d'enregistrement selon l'une quelconque des revendications 12 à 14 lorsque ledit programme est exécuté par un processeur.

## Patentansprüche

1. Vorrichtung zur Authentifizierung eines Benutzers (U) einer ersten elektronischen Vorrichtung (2), die mit einer zweiten elektronischen Vorrichtung (3) verbunden ist, wobei die erste elektronische Vorrichtung (2) und die zweite elektronische Vorrichtung (3) durch den Benutzer (U) separat tragbar sind, wobei die Authentifizierungsvorrichtung (1, 21) Folgendes umfasst:
- einen Analysator (11), der dazu fähig ist zu prüfen, ob ein detektierter Wert eines relativen charakteristischen Parameters (prc_{3/2}_vd) der zweiten elektronischen Vorrichtung einem gespeicherten Wert dieses relativen charakteristischen Parameters (prc_{3/2}_vm) der zweiten elektronischen Vorrichtung entspricht, der mit einer Kennung (uid) eines Benutzers (U), der eine Authentifizierung (auth_req) anfordert, assoziiert ist, wobei der relative charakteristische Parameter (prc_{3/2}) dem charakteristischen Parameter der zweiten elektronischen Vorrichtung (prc₃), der relativ zu dem charakteristischen Parameter der ersten elektronischen Vorrichtung (prc₂) gemessen wird, entspricht.

2. Authentifizierungsvorrichtung nach dem vorhergehenden Anspruch, wobei der Analysator (11) dazu fähig ist zu prüfen, ob eine Reihe von detektierten Werten eines relativen charakteristischen Parameters ({pcr_{3/2}_vd(n)}_{n=1...N}) der zweiten elektronischen Vorrichtung einer gespeicherten Reihe von Werten ({pcr_{3/2}_vm(n)}_{n=1...N}) dieses relativen charakteristischen Parameters der zweiten elektronischen Vorrichtung entspricht, die mit einer Kennung (uid) eines Benutzers, der eine Authentifizierung anfordert, assoziiert ist.

3. Authentifizierungsvorrichtung nach einem der vorhergehenden Ansprüche, wobei der Analysator (11) dazu fähig ist, die Werte mehrerer relativer charakteristischer Parameter ( ${\left\{{pcr}_{3 / 2}^{i}_vd\right\}}^{i = 1 … I} , {\left\{{pcr}_{3 / 2}^{i}_vd\left(n\right)\right\}}_{n = 1 … N}^{i = 1 … I}$ ) mindestens einer zweiten elektronischen Vorrichtung (3) zu prüfen.

4. Authentifizierungsvorrichtung nach einem der vorhergehenden Ansprüche, wobei die Authentifizierungsvorrichtung (1, 21) mindestens eine der folgenden Vorrichtungen (10) zum Bereitstellen eines relativen charakteristischen Parameters der zweiten elektronischen Vorrichtung (3) umfasst:
- einen Detektor (10_{D}) für einen relativen charakteristischen Parameter der zweiten elektronischen Vorrichtung,
- einen Empfänger (100_{R}) für einen detektierten Wert des relativen charakteristischen Parameters (pcr_{3/2}_vd) der zweiten elektronischen Vorrichtung, wobei der Empfänger (100_{R}) einen Wert (pcr_{3/2}_vd) empfängt, der von einem Detektor (300D) für einen relativen charakteristischen Parameter der zweiten elektronischen Vorrichtung, der in der zweiten elektronischen Vorrichtung (3) implementiert ist, stammt,
- einen Empfänger (100_{R}) für einen detektierten Wert des relativen charakteristischen Parameters (pcr_{3/2}_vd) der zweiten elektronischen Vorrichtung, wobei der Empfänger (100_{R}) einen Wert (pcr_{3/2}_vd) empfängt, der von einem Detektor (200D) für einen relativen charakteristischen Parameter der zweiten elektronischen Vorrichtung, der in der ersten elektronischen Vorrichtung (2) implementiert ist, stammt,
- einen Rechner (10_{R}) für einen detektierten Wert des relativen charakteristischen Parameters (pcr_{3/2}_vd) der zweiten elektronischen Vorrichtung, der Folgendes umfasst:
+ einen Empfänger (100_{R}) für einen detektierten Wert des charakteristischen Parameters der zweiten elektronischen Vorrichtung (pc₃_vd), der von der zweiten elektronischen Vorrichtung (3) stammt, und für einen detektierten Wert des charakteristischen Parameters der ersten elektronischen Vorrichtung (pc₂_vd), der von der ersten elektronischen Vorrichtung (2) stammt, und
+ einen Elementarrechner (101_{R}), der dazu fähig ist, einen Wert des relativen charakteristischen Parameters (pcr_{3/2}_vd) der zweiten elektronischen Vorrichtung in Abhängigkeit von dem empfangenen detektierten Wert des charakteristischen Parameters der zweiten elektronischen Vorrichtung (pc₃_vd) und dem empfangenen detektierten Wert des charakteristischen Parameters der ersten elektronischen Vorrichtung (pc₂_vd) zu bestimmen.

5. Authentifizierungsvorrichtung nach dem vorhergehenden Anspruch, wobei der Detektor (10_{D}) Folgendes umfasst:
- eine Steuerung (102), die dazu fähig ist, mindestens einen entfernten Sensor (200_{D}, 300_{D}) für Werte des charakteristischen Parameters (pcr_{3/2}_vd) einer entfernten Vorrichtung (2, 3) zu steuern (cpt_cmd), wobei der Sensor (200_{D}, 300_{D}) in der entfernten Vorrichtung (2, 3) implementiert ist.

6. Authentifizierungsvorrichtung nach einem der Ansprüche 4 oder 5, wobei der Detektor (10_{D}) Folgendes umfasst:
- einen Sensor (100_{D}), der dazu fähig ist, einen Wert des relativen charakteristischen Parameters der zweiten elektronischen Vorrichtung (pcr_{3/2}_vd) zu messen.

7. Authentifizierungsvorrichtung nach einem der vorhergehenden Ansprüche, wobei der relative charakteristische Parameter (pcr_{3/2}_vd) durch mindestens einen der folgenden charakteristischen Parameter gebildet wird:
- relative Position (posr_{3/2}) der zweiten elektronischen Vorrichtung in Bezug auf die erste elektronische Vorrichtung;
- relative Entfernung (dr_{3/2}) der zweiten elektronischen Vorrichtung von der ersten elektronischen Vorrichtung;
- relative Ausrichtung (or_{3/2}) der zweiten elektronischen Vorrichtung in Bezug auf die erste elektronische Vorrichtung;
- relative Geschwindigkeit (vr_{3/2}) der zweiten elektronischen Vorrichtung in Bezug auf die erste elektronische Vorrichtung;
- relative Beschleunigung (ar_{3/2}) der zweiten elektronischen Vorrichtung in Bezug auf die erste elektronische Vorrichtung.

8. Authentifizierungsvorrichtung nach einem der vorhergehenden Ansprüche, wobei die erste elektronische Vorrichtung (2) durch eine von folgenden tragbaren Hauptvorrichtungen gebildet wird:
- ein tragbares Kommunikationsendgerät;
- ein Tablet;
- eine tragbare Konsole;
- ein Virtual-Reality-Headset;
- ein Augmented-Reality-Headset.

9. Authentifizierungsvorrichtung nach einem der vorhergehenden Ansprüche, wobei die zweite elektronische Vorrichtung (3) durch eine von folgenden tragbaren sekundären Vorrichtungen gebildet wird:
- ein tragbares Peripheriegerät;
- ein tragbares verbundenes Objekt;
- einen Virtual-Reality-Controller;
- einen Augmented-Reality-Controller.

10. Erste elektronische Vorrichtung eines Benutzers, wobei die erste elektronische Vorrichtung (2) des Benutzers (U) mit einer zweiten elektronischen Vorrichtung (3) verbunden ist, wobei die erste elektronische Vorrichtung (2) und die zweite elektronische Vorrichtung (3) durch den Benutzer (U) separat tragbar sind, wobei die erste elektronische Vorrichtung (2) Folgendes umfasst:
- eine Authentifizierungsvorrichtung (21) nach einem der Ansprüche 1-9.

11. Verfahren zur Authentifizierung eines Benutzers (U) einer ersten elektronischen Vorrichtung (D'), die mit einer zweiten elektronischen Vorrichtung (D") verbunden ist, wobei die erste elektronische Vorrichtung (D') und die zweite elektronische Vorrichtung (D") durch den Benutzer (U) separat tragbar sind, wobei das Authentifizierungsverfahren (U_AUTH) Folgendes umfasst:
- Prüfen (PCRV_CMP), ob ein detektierter Wert eines relativen charakteristischen Parameters der zweiten elektronischen Vorrichtung (pcr_vd) einem gespeicherten Wert dieses relativen charakteristischen Parameters der zweiten elektronischen Vorrichtung (pcr_vm) entspricht, der mit einer Kennung (uid) eines Benutzers, der eine Authentifizierung (auth_req) anfordert, assoziiert ist, wobei der relative charakteristische Parameter (pcr) dem charakteristischen Parameter der zweiten elektronischen Vorrichtung (pc"), der relativ zu dem charakteristischen Parameter der ersten elektronischen Vorrichtung (pc') gemessen wird, entspricht.

12. Verfahren zum Registrieren eines Benutzers (U) einer ersten elektronischen Vorrichtung (D'), die mit einer zweiten elektronischen Vorrichtung (D") verbunden ist, wobei die erste elektronische Vorrichtung (D') und die zweite elektronische Vorrichtung (D") durch den Benutzer (U) separat tragbar sind, wobei das Registrierungsverfahren (U_REG) Folgendes umfasst:
- Speichern (MEM), in Assoziation mit einer Kennung (uid) des Benutzers, mindestens eines Wertes eines relativen charakteristischen Parameters der zweiten elektronischen Vorrichtung (pcr_vm), wobei der relative charakteristische Parameter (pcr) dem charakteristischen Parameter der zweiten elektronischen Vorrichtung (pc"), der relativ zu dem charakteristischen Parameter der ersten elektronischen Vorrichtung (pc') gemessen wird, entspricht.

13. Registrierungsverfahren nach dem vorhergehenden Anspruch, wobei das Registrierungsverfahren (U_REG) Folgendes umfasst:
- Messen (PCR_MST) mindestens eines Wertes des relativen charakteristischen Parameters der zweiten elektronischen Vorrichtung (pcr_vm), wobei der gemessene Wert (pcr_vm) direkt oder indirekt gespeichert wird (MEM).

14. Registrierungsverfahren nach dem vorhergehenden Anspruch, wobei das Registrierungsverfahren (U_REG) Folgendes umfasst:
- Berechnen (PCR_DT) eines statistischen Wertes des relativen charakteristischen Parameters der zweiten elektronischen Vorrichtung, wobei der statistische Wert (pcr_vm) gespeichert wird (MEM).

15. Programm, das Programmcodeanweisungen umfasst, die bei der Ausführung des Programms durch einen Prozessor die Schritte des Authentifizierungsverfahrens nach Anspruch 11 und/oder des Registrierungsverfahrens nach einem der Ansprüche 12 bis 14 ausführen.

## Claims

1. Device for authenticating a user (U) of a first electronic device (2) connected to a second electronic device (3), the first electronic device (2) and the second electronic device (3) being separately portable by the user (U), the authentication device (1, 21) comprising:
- an analyser (11) capable of checking whether a detected value (prc_{3/2}_vd) of a relative characteristic parameter of the second electronic device corresponds to a stored value (prc_{3/2}_vm) of this relative characteristic parameter of the second electronic device associated with an identifier (uid) of a user (U) requesting an authentication (auth_req), with the relative characteristic parameter (prc_{3/2}) corresponding to the characteristic parameter (prc₃) of the second electronic device measured relative to the characteristic parameter (prc₂) of the first electronic device.

2. Authentication device according to the preceding claim, wherein the analyser (11) is capable of checking whether a series of detected values ({pcr_{3/2}_vd(n)}_{n=1...N}) of a relative characteristic parameter of the second electronic device corresponds to a series of stored values ({pcr_{3/2}_vm(n)}_{n=1...N}) of this relative characteristic parameter of the second electronic device associated with an identifier (uid) of a user requesting authentication.

3. Authentication device according to any one of the preceding claims, wherein the analyser (11) is capable of checking the values ( ${\left\{{pcr}_{3 / 2}^{i}_vd\right\}}^{i = 1 … I} , {\left\{{pcr}_{3 / 2}^{i}_vd\left(n\right)\right\}}_{n = 1 … N}^{i = 1 … I}$) of a plurality of relative characteristic parameters of at least one second electronic device (3).

4. Authentication device according to any one of the preceding claims, wherein the authentication device (1, 21) comprises at least one from among the devices (10) for providing a relative characteristic parameter of the second electronic device (3), namely:
- a detector (10_{D}) for detecting a relative characteristic parameter of the second electronic device;
- a receiver (100_{R}) for receiving a detected value (pcr_{3/2}_vd) of the relative characteristic parameter of the second electronic device, with the receiver (100_{R}) receiving a value (pcr_{3/2}_vd) originating from a detector (300D) for detecting a relative characteristic parameter of the second electronic device implemented in the second electronic device (3);
- a receiver (100_{R}) for receiving a detected value (pcr_{3/2}_vd) of the relative characteristic parameter of the second electronic device, with the receiver (100_{R}) receiving a value (pcr_{3/2}_vd) originating from a detector (200D) for detecting a relative characteristic parameter of the second electronic device implemented in the first electronic device (2);
- a computer (10_{R}) for computing a detected value (pcr_{3/2}_vd) of the relative characteristic parameter of the second electronic device comprising:
+ a receiver (100_{R}) for receiving a detected value (pc₃_vd) of the characteristic parameter of the second electronic device originating from the second electronic device (3) and a detected value (pc₂_vd) of the characteristic parameter of the first electronic device originating from the first electronic device (2); and
+ a basic computer (101_{R}) capable of determining a value (pcr_{3/2}_vd) of the relative characteristic parameter of the second electronic device as a function of the received detected value (pc₃_vd) of the characteristic parameter of the second electronic device and of the received detected value (pc₂_vd) of the characteristic parameter of the first electronic device.

5. Authentication device according to the preceding claim, wherein the detector (10_{D}) comprises:
- a controller (102) capable of commanding (cpt_cmd) at least one remote sensor (200_{D}, 300_{D}) for detecting values (pcr_{3/2}_vd) of the characteristic parameter of a remote device (2,3), with the sensor (200_{D}, 300_{D}) being implemented in the remote device (2,3).

6. Authentication device according to either one of Claims 4 and 5, wherein the detector (10_{D}) comprises:
- a sensor (100_{D}) capable of measuring a value (pcr_{3/2}_vd) of the relative characteristic parameter of the second electronic device.

7. Authentication device according to any one of the preceding claims, wherein the relative characteristic parameter (pcr_{3/2}_vd) is made up of at least one of the following characteristic parameters:
- relative position (posr_{3/2}) of the second electronic device relative to the first electronic device;
- relative distance (dr_{3/2}) of the second electronic device relative to the first electronic device;
- relative orientation (or_{3/2}) of the second electronic device relative to the first electronic device;
- relative speed (vr_{3/2}) of the second electronic device relative to the first electronic device;
- relative acceleration (ar_{3/2}) of the second electronic device relative to the first electronic device.

8. Authentication device according to any one of the preceding claims, wherein the first electronic device (2) is made up of one from among the following main portable devices:
- a portable communication terminal;
- a tablet;
- a portable console;
- a virtual reality headset;
- an augmented reality headset.

9. Authentication device according to any one of the preceding claims, wherein the second electronic device (3) is made up of one from among the following secondary portable devices:
- a portable peripheral;
- a portable connected object;
- a virtual reality joystick;
- an augmented reality joystick.

10. First electronic device of a user, with the first electronic device (2) of the user (U) being connected to a second electronic device (3), with the first electronic device (2) and the second electronic device (3) being separately portable by the user (U), the first electronic device (2) comprising:
- an authentication device (21) according to one of Claims 1 to 9.

11. Method for authenticating a user (U) of a first electronic device (D') connected to a second electronic device (D"), with the first electronic device (D') and the second electronic device (D") being separately portable by the user (U), the authentication method (U_AUTH) comprising:
- checking (PCRV_CMP) whether a detected value (pcr_vd) of a relative characteristic parameter of the second electronic device corresponds to a stored value (pcr_vm) of this relative characteristic parameter of the second electronic device associated with an identifier (uid) of a user requesting an authentication (auth_req), with the relative characteristic parameter (pcr) corresponding to the characteristic parameter (pc") of the second electronic device measured relative to the characteristic parameter (pc') of the first electronic device.

12. Method for registering a user (U) of a first electronic device (D') connected to a second electronic device (D"), with the first electronic device (D') and the second electronic device (D") being separately portable by the user (U), the registration method (U_REG) comprising:
- storing (MEM), in combination with an identifier (uid) of the user, at least one value (pcr_vm) of a relative characteristic parameter of the second electronic device, with the relative characteristic parameter (pcr) corresponding to the characteristic parameter (pc") of the second electronic device measured relative to the characteristic parameter (pc') of the first electronic device.

13. Registration method according to the preceding claim, the registration method (U_REG) comprising:
- measuring (PCR_MST) at least one value (pcr_vm) of the relative characteristic parameter of the second electronic device, with the measured value (pcr_vm) being stored (MEM) directly or indirectly.

14. Registration method according to the preceding claim, the registration method (U_REG) comprising:
- computing (PCR_DT) a statistical value of the relative characteristic parameter of the second electronic device, with the statistical value (pcr_vm) being stored (MEM).

15. Program comprising program code instructions for executing the steps of the authentication method according to Claim 11 and/or of the registration method according to any one of Claims 12 to 14 when said program is executed by a processor.
